(19) Europäisches Patentamt / European Patent Office / Office européen des brevets

(11) **EP 4 742 078 A1**

(12) **EUROPEAN PATENT APPLICATION**

(43) Date of publication:
**13.05.2026  Bulletin 2026/20**

(21) Application number: **24212271.1**

(22) Date of filing: **12.11.2024**

(51) International Patent Classification (IPC):
**G06F 30/25** (2020.01)        **G06F 30/27** (2020.01)
**G06N 3/045** (2023.01)

(52) Cooperative Patent Classification (CPC):
**G06F 30/27; G06F 30/25; G06N 3/044;**
**G06N 3/045; G06N 3/08; G06N 3/084;**
G06F 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXAI GmbH**
**4020 Linz (AT)**

(72) Inventors:
• **Brandstetter, Johannes**
  **Poestlingberg (AT)**
• **Kronlachner, Tobias**
  **Linz (AT)**
• **Lichtenegger, Thomas**
  **Haibach im Muehlkreis (AT)**
• **Alkin, Benedikt**
  **Sankt Pantaleon (AT)**

(74) Representative: **Best, Bastian**
**Bestpatent**
**Konrad-Zuse-Platz 8**
**81829 München (DE)**

(54) **REAL-TIME SIMULATION OF INDUSTRIAL PARTICLE FLOWS**

(57)    A method for real-time simulation of material flow in an industrial process involves receiving input data that characterizes the physics parameters of the material flow. This input data is used to generate a continuous field representation, which feeds into a trained machine-learning model. The model then predicts the material flow, and this prediction result is displayed on an electronic display.

FIG. 2

**Description**

**TECHNICAL FIELD**

The present invention generally relates to the field of neural network system architectures for machine learning, and more particularly to hardware-efficient neural network models which are usable for physics simulations.

**BACKGROUND**

Advancements in computing power have made it possible to numerically simulate large-scale fluid-mechanical, particulate, or otherwise material flow-based processes. Such simulations are increasingly important for understanding and optimizing industrial processes in various sectors, including pharmaceuticals, agriculture, chemical engineering, and engineering in general, such as relating to granular flows and powder mechanics.

The Discrete Element Method (DEM), see Cundall, P. A. and Strack, O. D. L. A discrete numerical model for granular assemblies. Geotechnique, 29(1):47-65, 1979, provides one of the most popular representations of a wide range of physical systems involving particulate matter. DEM is particularly well-suited for capturing the interactions of individual particles, providing insights into the bulk properties of the material, by tracking and computing the behavior of each grain or particle. Consequently, DEM has become a widely accepted approach for tackling engineering problems connected to disperse and discontinuous materials, particularly in granular flows and powder mechanics. Typical target areas comprise mining and mineral processing, steelmaking, pharmaceutics, agriculture and food processing, and additive manufacturing and powder bed fusion.

However, DEM simulations are computationally expensive because of the intrinsic multiscale nature of particulate systems, restricting either the duration of simulations or the number of particles that can be simulated. This limits the practical applicability of DEM for certain industrial problems. Moreprecisely, the inherent multiscale nature of particulate systems makes DEM computationally infeasible in several regards:

1. Large-scale granular flows typically consist of a huge number of particles with each of them interacting with the surrounding ones. For every grain, its equation of motion (EOM) needs to be solved in a coupled fashion. Current DEM studies dealing with process relevant problems use up to two million particles, while e.g. an industrial shaft furnace or fluidized bed reactor may well contain several orders of magnitude more grains.

2. The high material stiffness of solid particles severely limits the numerical time step that can be used in the solution procedure of the EOMs. Often, its value is in the range of microseconds, whereas process-relevant durations may be minutes or hours.

3. There is no straight-forward relationship between the microscopic DEM parameters and macroscopically observed behavior. Instead, optimization techniques need to be used to find a set of DEM parameters that reproduces certain characterization measurements (e.g. angle of repose and shear cell measurements). Such a calibration routine needs to be performed for any kind of material before the actual simulation of interested can be approached. Any change of material properties (e.g. due to different size distribution, degradation, moisture uptake) requires a new calibration.

The first-mentioned issue above is usually mitigated by employing coarse-graining techniques that replace many small particles with a large parcel. If the interaction parameters of these parcels are chosen appropriately, either using scaling rules or a calibration routine, the accuracy impairments compared to the fine-grained ground truth are often acceptable. However, the limitation of small time steps and the need for parameter calibration persist and make DEM slow and sometimes too cumbersome for a quick application within engineering workflows. Furthermore, establishing a reliable connection between the microscopic parameters used in DEM simulations and the macroscopic material properties observed in experiments often requires elaborate calibration procedures. This calibration process can be time-consuming and may involve significant uncertainties.

It is therefore an objective of the present invention to provide improved methods and systems for simulating industrial material flows that require less computing resources, thereby overcoming the above limitations at least in part.

**SUMMARY OF THE INVENTION**

The above and other objectives may be achieved by the subject-matter defined by the independent claims. Advantageous modifications of embodiments of the present disclosure are defined in the dependent claims as well as in the description and the drawings.

One aspect of the invention relates to a method of simulation. The method may be a method of physics simulation. The method may be a method of simulation of a technical system, device and/or process. The method may be a method of simulation of a material flow. The material flow may be in an industrial process. The method may be performed within an engineering workflow. The simulation may be a real-time simulation. The method may be computer-implemented. The material flow may comprise one or more of a particle flow, a fluid flow, and a coupled particle-fluid flow. The method may be configured to replace a Discrete Element Method (DEM).

It may be provided that the method comprises a step of receiving input data. The input data may characterize the material flow, in particular one or more physics parameters of the material flow (in the industrial process). It may be provided that the method comprises a step of generating a continuous field representation of the input data. It may be provided that the method comprises a step of generating a prediction of the material flow (in the industrial process). This step may be performed using a trained machine-learning model that takes as input the continuous field representation. It may be provided that the method treats the inputs and outputs of the simulation as continuous fields. It may be provided that the method comprises a step of using the generated prediction and/or simulation result, such as displaying the prediction, or a result of the prediction, on an electronic display.

Accordingly, a unique end-to-end approach, also referred to as NeuralDEM, is provided to replace slow and computationally demanding numerical DEM routines with fast, adaptable machine-learning surrogates.

It may be provided that the simulation of the material flow is a real-time simulation of the material flow. The step of displaying a result of the prediction may be performed while the simulation is running and/or while the industrial process is running. The step of generating a prediction of the material flow may be performed while the simulation is running and/or while the industrial process is running.

Such a real-time simulation enables immediate analysis and decision-making based on live data and conditions. Unlike traditional simulations, which may take hours or even days to run, the real-time simulation provides instantaneous feedback, allowing users to interact with and adjust parameters on the fly. Moreover, in engineering, fast simulations are driving the design of safer and more efficient structures and machines by accurately predicting their behavior under different conditions, thereby allowing extensive scans of vast parameter spaces, and eliminating the need for expensive physical prototypes. This is especially beneficial for numerically expensive problems as found, e.g., in computational particle mechanics and/or computational fluid dynamics (CFD).

It may be provided that the continuous field representation is configured to model a Lagrangian discretization of a DEM routine, in particular in a compressed latent space. In other words, the Lagrangian discretization of DEM may be treated as an underlying continuous field

It may be provided that the machine-learning model comprises a neural operator, or one or more neural operators. The neural operator may be configured to calculate a numerical DEM routine.

It may be provided that the neural operator is a multi-branch neural operator. The multi-branch neural operator may comprise at least one main branch, at least one auxiliary branch, or both.

It may be provided that the at least one main branch is configured to model a primary quantity. The primary quantity may represent one or more microscopic properties of the material flow and/or the industrial process, preferably as continuous field representation.

It may be provided that the at least one auxiliary branch is configured to model a secondary quantity. The secondary quantity may represent one or more macroscopic properties of the material flow and/or the industrial process, preferably as continuous field representation. In other words, macroscopic behavior may be directly modelled as one or more additional auxiliary fields.

It may be provided that the multi-branch neural operator is configured to scale to real-time modeling of industrially-sized scenarios. Such scenarios have previously posed insurmountable challenges for deep-learning models.

It may be provided that each main branch and auxiliary branch comprises a stack of transformer blocks where weights are not shared between branches.

It may be provided that the neural operator comprises one or more characteristics of a multi-modal diffusion transformer (MMDiT) as disclosed in Esser, P., Kulal, S., Blattmann, A., Entezari, R., MÅNuller, J., Saini, H., Levi, Y., Lorenz, D., Sauer, A., Boesel, F., Podell, D., Dockhorn, T., English, Z., and Rombach, R. Scaling rectified flow transformers for high-resolution image synthesis. In Forty-first International Conference on Machine Learning, ICML 2024, Vienna, Austria, July 21-27, 2024. OpenReview.net, 2024. URL https://openreview.net/forum?id=FPnUhsQJ5B.

It may be provided that the method is configured to picture one or more long-term transport processes across different regimes using macroscopic observables without any reference to microscopic model parameters.

It may be provided that the method comprises a step of outputting a simulated and/or optimized design of the material flow, the technical system, the technical device and/or the technical process. The design may be in a machine-readable and/or machine-processable format and/or may include one or more control signals configured to control a technical apparatus configured for building the technical system or device and/or for performing the technical process in accordance with the simulated and/or optimized design.

It may be provided that the input data comprises, or is, measurement data collected from by one or more sensors, in particular during operation of the industrial process and/or the technical system or device. In other words, the method of simulation may use measurements as input to calculate and/or predict the physical state of an existing real industrial process and/or an existing real technical system or device.

It may be provided that the generated prediction reflects the physical state and/or behavior of the industrial process and/or the technical system or device.

It may be provided that the method comprises a step of using the generated prediction and/or simulation result. Such use may be limited according to an intended technical use. In other words, non-technical uses of the generated prediction and/or the simulation results (such as gaining scientific knowledge about a technical or natural system) maybe excluded.

The technical system or device (also referred to herein as "object under consideration" or "system under consideration") to be simulated can be any device which an engineer would like to construct and/or optimize in terms of at least one physics parameter thereof. The technical system or device may perform a technical process when it operates, in particular the mentioned industrial process. The technical system or device may be configured to be exposed to a material flow. In other words, the technical system or device maybe a material flow-exposed technical system or device, i.e., a technical system or device that is configured to interact with material.

Some illustrative examples of technical systems or devices which can be simulated using the concepts disclosed herein include, without limitation:

- Granular flow systems, i.e., any system where large numbers of solid particles interact under the influence of gravity and other forces, such as hoppers, silos, chutes, conveyor belts, powder handling equipment, avalanches, landslides, or the like.
- Multiphase flow systems, i.e., systems involving the simultaneous flow of materials in different phases (solid, liquid, gas), such as fluidized bed reactors, pneumatic conveying systems, bubble columns, slurry transport, sediment transport in rivers, or the like.
- Discrete Element Method (DEM) applications, i.e., any scenario where the behavior of individual elements (particles, objects) needs to be tracked and simulated, such as rock mechanics, soil mechanics, pharmaceutical manufacturing (tablet coating, mixing), food processing, or the like.

The use of the method according to any of the aspects disclosed herein may be limited to the simulation of an industrial process. Some illustrative examples of industrial processes include, without limitation:

- Mixing and Blending: Optimizing mixing processes in pharmaceutical, food, and/or chemical industries.
- Segregation and Separation: Understanding and controlling segregation in material handling.
- Size Reduction: Simulating grinding, crushing, and/or milling operations.
- Additive Manufacturing: Predicting powder flow and packing density in 3D printing processes.
- Pharmaceutical Industry: Simulating the flow of powders in pharmaceutical products such as tablet presses, capsule filling machines, and/or inhaler devices.
- Food Industry: Optimizing the flow of grains in silos, the mixing of ingredients in food processors, and/or the behavior of granular materials during packaging.
- Energy Industry: Modeling the flow of coal in power plants, the fluidization of biomass in gasifiers, and/or the movement of sand in fracking operations.

Illustrative examples of physics parameters usable in the method according to any of the aspects disclosed herein may include particle properties, such as, without limitation:

- Size and Shape: Particle diameter (mean, distribution), sphericity, aspect ratio.
- Density: Solid density, bulk density (accounts for voids).
- Elasticity: Young's modulus, Poisson's ratio, coefficient of restitution (energy loss during collision).
- Friction: Coefficients of static and dynamic friction (particle-particle, particle-wall).
- Cohesion: Van der Waals forces, surface energy, liquid bridge forces (if moisture is present).

Illustrative examples of physics parameters usable in the method according to any of the aspects disclosed herein may include fluid properties (if applicable), such as, without limitation:

- Density and Viscosity: Fluid density, dynamic viscosity.
- Drag Force: Drag coefficient (depends on particle shape and Reynolds number).

Illustrative examples of physics parameters usable in the method according to any of the aspects disclosed herein may include interaction forces, such as, without limitation:

- Gravity: The driving force in many granular systems.

- Contact Forces: Forces arising from collisions and contacts between particles.
- Fluid-Particle Forces: Drag, lift, and buoyancy forces exerted by the fluid on the particles.
- Electrostatic Forces: Relevant for some materials, especially fine powders.

Illustrative examples of physics parameters usable in the method according to any of the aspects disclosed herein may include operational parameters, such as, without limitation:

- Geometry of the simulated system or device: Shape, size, and/or angles.
- Inlet/Outlet Conditions: Flow rate of material entering and leaving the system.
- Fluidization Velocity (for fluidized beds): The gas velocity required to suspend the particles.
- Temperature and Pressure: Can affect material properties and fluid behavior.

Illustrative examples of physics parameters usable in the method according to any of the aspects disclosed herein may include numerical parameters, such as, without limitation:

- Time Step: The time interval used in the simulation. Needs to be small enough to capture important dynamics.
- Grid Size (if using grid-based methods): The resolution of the spatial domain.

Another aspect of the present invention relates to a trained machine-learning model configured for use in a method according to any one of the aspects described herein.

Another aspect of the present invention relates to a data processing apparatus. The data processing apparatus may comprise means for carrying out a method according to any one of the aspects described herein. Another aspect of the present invention relates to a data processing apparatus comprising a memory and one or more processors coupled to the memory, the one or more processors being configured to carry out a method according to any one of the aspects described herein.

Another aspect of the present invention relates to a computer program. Another aspect of the present invention relates to a computer-readable medium having stored thereon a computer program. The computer program may comprise instructions which, when the program is executed by a computer, cause the computer to carry out a method according to any one of the aspects described herein. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment.

Another aspect of the present invention relates to a non-transitory computer-readable medium storing a set of instructions that, when executed by one or more processors of an apparatus, cause the apparatus to carry out a method according to any one of the aspects described herein.

The terms used herein should generally be construed as understood by the average person skilled in the art, unless explicitly indicated otherwise. The following explanations may guide the understanding:

The term "Artificial intelligence" (AI) may be understood as referring to a branch of computer science that aims to develop machines or software capable of intelligent behavior, typically with the goal to mirror or surpass human intelligence in specific tasks. AI systems are designed to perform complex tasks such as reasoning, learning, perception, problem-solving, and understanding natural language. These systems can typically adapt to new situations and improve their performance over time. The goal of AI is to create systems that can function autonomously and interact with their environment in a human-like manner.

The term "Artificial neural network" ANN), or "neural network" (NN) in short, may be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data.

The term "Continuous field" or "Continuous field representation" may be understood as a representation of a phenomenon where every point in a given space has a value associated with it. This means that the data can be measured at any location within the field, resulting in a smooth and uninterrupted surface. For example, temperature or elevation can be considered continuous fields because they can vary continuously across space without abrupt changes. Mathematically, this is often modeled as a function $f(x)$ that maps each location x to a value, allowing for an infinite number of possible measurements within the defined area.

The term "Coupled particle-fluid flow" may be understood as a type of material flow which refers to the interaction between a fluid phase and a dispersed phase of particles within a system, where both phases influence each other's dynamics. This concept is particularly important in scenarios where the behavior of particles significantly

affects fluid properties and vice versa, necessitating a comprehensive modeling approach.

The term "Fluid flow" may be understood as a type of material flow which refers to the movement of liquids and gases, driven primarily by pressure gradients and unbalanced forces. This movement is a fundamental aspect of fluid dynamics, a subfield of fluid mechanics that studies the behavior of fluids in motion.

The term "Industrial process" may be understood as a systematic series of mechanical, physical, chemical and/or electrical operations employed in the manufacturing of goods. These processes are essential for transforming raw materials into finished products on a large scale, often involving complex sequences that enhance efficiency and productivity in various industries.

The term "Machine learning" (ML) may be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "Machine-learning algorithm" may be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "Machine-learning model" may be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "Material flow" may be understood as the representation and analysis of the movement and transformation of materials within a defined system. This concept is crucial in various fields, including manufacturing, logistics, and environmental science, where understanding how materials interact and change state is essential for optimizing processes.

The term "Neural operator" may be understood as referring to a class of deep learning architectures designed to learn maps between infinite-dimensional function spaces. Neural operators represent an extension of traditional artificial neural networks, marking a departure from the typical focus on learning mappings between finite-dimensional Euclidean spaces or finite sets. Neural operators directly learn operators between function spaces; they can receive input functions, and the output function can be evaluated at any discretization. The primary application of neural operators is in learning surrogate maps for the solution operators of partial differential equations (PDEs), which are critical tools in modeling the natural environment. Standard PDE solvers can be time-consuming and computationally intensive, especially for complex systems. Neural operators have demonstrated improved performance in solving PDEs compared to existing machine learning methodologies while being significantly faster than numerical solvers. Neural operators have also been applied to various engineering disciplines such as turbulent flow modeling, computational mechanics, graph-structured data, and the geosciences. In particular, they have been applied to learning stress-strain fields in materials, classifying complex data like spatial transcriptomics, predicting multiphase flow in porous media, and carbon dioxide migration simulations. Finally, the operator learning paradigm allows learning maps between function spaces, and is different from parallel ideas of learning maps from finite-dimensional spaces to function spaces, and subsumes these settings when limited to fixed input resolution.

The term "Particle flow", also referred to as "Particulate flow", may be understood as a type of material flow which describes how particles move through a fluid medium under the influence of various forces, including drag, gravity, and inertial effects. The behavior of these particles can significantly affect the overall characteristics of the flow, such as turbulence and mixing.

The term "Physics parameter" may be understood as a quantity or characteristic that is used to define, describe, or analyze a physical system. These parameters are essential in formulating mathematical models that represent physical phenomena and can significantly influence the behavior and outcomes of these systems.

The term "Training" may be understood as as referring to the process of teaching a machine-learning model to make predictions or decisions, by exposing it to data for which the outcomes are known. The training process typically involves feeding a training dataset into a machine-learning algorithm, which then uses statistical analysis to learn the patterns or relationships within the data. During training, the algorithm iteratively adjusts the parameters of the model to minimize the difference between the predicted outcomes and the actual outcomes in the training data. This adjustment process is typically guided by a loss function, which measures the accuracy of the model's predictions. The goal of training is to produce a model that accurately represents the underlying structure of the data, enabling it to make reliable predictions about new, unseen data. Supervised learning involves training a model on a labeled dataset, where each example in the training data is paired with the correct output. The model learns to predict the output from the input data. Unsupervised learning involves training a model on data without labeled responses. The model tries to find patterns and relationships in the data on its own. Semi-supervised learning combines both labeled and unlabeled data during the training process, which can be beneficial when acquiring a fully labeled dataset is costly or impractical.

The term "Transformer model" may be understood as a type of neural network model that is distinguished by its exclusive reliance on attention mechanisms, eschewing recurrent layers to process sequential data. At the core of the Transformer is the self-attention mechanism, which enables each position in the sequence to attend to all positions in the previous layer of the model simultaneously. This global perspective is said to allow the model to learn context and relationships between words or elements in the input sequence, regardless of their positional distance from each other. The Transformer model typically comprises an encoder and a decoder. The encoder processes the input sequence and transforms it into a continuous representation that holds all the learned information of that sequence. Each encoder layer typically has two sub-layers: a multi-head self-attention mechanism and a position-wise fully connected feed-forward network. The decoder generates the output sequence based on the encoder's representation and the previously generated elements. Each decoder layer typically has three sub-layers: a multi-head self-attention mechanism, a multi-head attention mechanism over the encoder's output, and a position-wise fully connected feed-forward network.

## BRIEF DESCRIPTION OF THE DRAWINGS

The invention may be better understood by reference to the following drawings:

FIG. 1 illustrates a schematic block diagram of a physics representation in accordance with one embodiment.

FIG. 2 illustrates a schematic block diagram of multi-branch neural operators in accordance with one embodiment.

FIG. 3 illustrates a schematic architecture of a multi-branch transformer block in accordance with one embodiment (primary DiT modulation is applied to each attention and MLP block but is omitted for visual clarity).

FIG. 4 illustrates details of an experimental test setup in accordance with one embodiment.

FIG. 5 illustrates a visualization of a NeuralDEM-generated trajectory versus a DEM simulation in accordance with one embodiment.

FIG. 6 illustrates the distribution of macroscopic measurements over the whole DEM-generated hopper dataset in accordance with one embodiment.

FIG. 7 illustrates macroscopic simulation insights from the predicted occupancy field in accordance with one embodiment.

FIG. 8 illustrates a visualization of a NeuralDEM-generated material residence time versus a DEM simulation in accordance with one embodiment.

FIG. 9 illustrates a generalization to DEM simulation settings that are outside the range seen during training in accordance with one embodiment.

FIG. 10 illustrates a NeuralDEM transport field prediction using microscopic simulation parameters versus macroscopic material parameters in accordance with one embodiment.

FIG. 11 illustrates a NeuralDEM transport field prediction for the hopper case in refilling operation mode versus ground truth DEM simulation in accordance with one embodiment.

FIG. 12 illustrates a visualization of three snapshots for two different inlet velocities in accordance with one embodiment.

FIG. 13 illustrates a comparison of long term temporal averaging statistics for two fluid inlet velocities in accordance with one embodiment.

FIG. 14 illustrates an average solid fraction predicted by the NeuralDEM model in accordance with one embodiment.

FIG. 15 illustrates particle-based mixing and field-based concentration in accordance with one embodiment.

FIG. 16 illustrates a omparison of the temporal evolution of the Lacey mixing index for three different inlet velocities in accordance with one embodiment.

FIG. 17 illustrates a method of real-time simulation of a material flow in an industrial process in accordance with one embodiment.

FIG. 18 illustrates neural operator learning in accordance with one embodiment.

## DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

Certain embodiments disclosed herein provide a first end-to-end deep-learning alternative for modeling industrial processes, also referred to as NeuralDEM. In certain embodiments, multi-branch neural operators are provided which are scalable to real-time modeling of industrially-sized relevant scenarios. In certain embodiments, multi-branch neural operators model the Lagrangian discretization given by DEM simulations from a compressed Eulerian perspective, i.e., a field-based point of view, where - through model conditioning - the model can generalize across macroscopic quantities such as inflow velocity or internal friction angle. The inventors have found that this new modeling point of view very well aligns with the fact that the effective degrees of freedom of a DEM-simulated system are typically orders of magnitude less than the microscopic degrees of freedom. In certain embodiments, multi-physics modeling is provided via repeated interactions between physics phases. Multi-physics is, e.g., prevalent when modeling the interaction of fluid-dynamics and particulate systems in fluidized bed simulations. In certain embodiments, macroscopic processes are directly modeled via additional auxiliary continuous fields, allowing direct modeling of, e.g., mixing or transport processes.

Certain embodiments comprise a multi-branch neural operator framework that can learn the complex behavior of particulate systems over a wide range of dynamic regimes, for example starting from dense, pseudo-steady motion in hoppers to dilute, highly unsteady flow in fluidized bed reactors. NeuralDEM treats the Lagrangian discretization of DEM as an underlying continuous field, while simultaneously modeling macroscopic behavior directly as additional auxiliary fields. Long-term rollouts of our data-driven model show a high degree of stability and lead to accurate predictions regarding various target quantities such as residence times or mixing indices even for unseen conditions like different wall geometries, material properties or boundary values. Evaluation times are several orders of magnitude faster than the underlying (CFD-)DEM simulations and demonstrate the real-time capability of NeuralDEM. This remarkable speedup stems from NeuralDEM's field-based representation and the forward propagation thereof which is computationally much more efficient than the coupled solution of a huge number of real-space EOMs and lends itself to massive parallelization. As a side effect, NeuralDEM does not require the specification of microscopic DEM parameters. Instead, it can directly operate on macroscopic properties like angle of repose and shear cell characterization, which allows for a simple integration into engineering workflows.

Certain embodiments build upon the new concept of modeling physics via field-based representations disclosed herein for the first time. This approach allows to model macroscopic quantities extremely efficient, and thus, to scale to large systems.

However, in certain embodiments, the field-based representation comes with the limitation that properties attached to individual particles, which cannot be approximated spatially, are hard to model. To overcome this limitation these quantities are replaced in certain embodiments by an approximate field-based counterpart.

The demonstrated autoregressive rollout performances requires the output distribution to match the input distribution. For example, particle-based quantities will be approximated with their field counterpart, which does not necessarily match the distribution of the input data, stifling the ability of the model to perform a long horizon predictions. Additionally, the autoregressive rollout is compute intensive but could be improved using time propagation in the latent space. Certain embodiments work best within the data distribution they were trained on.

In the following, an embodiment of NeuralDEM will be described which presents an end-to-end solution for replacing computationally intensive numerical DEM routines and coupled DEM-CFD simulations with fast, flexible deep-learning surrogates. The embodiment comprises two conceptually new modeling paradigms:

1. Physics representation: The Lagrangian discretization of DEM is modeled as an underlying continuous field, while simultaneously modeling macroscopic behavior directly as additional auxiliary fields. NeuralDEM can encode different physics inputs which are representative for DEM dynamics and/or multi-physics scenarios. Examples include particle displacement, particle mixing, solid fraction, or particle transport.

2. Multi-branch neural operators: Multi-branch neural operators are introduced which are scalable to real-time modeling of industrially-sized scenarios. In certain embodiments, multi-branch neural operators build on the flexible and scalable "Universal Physics Transformer" framework disclosed in the German utility model no. DE 2020 24104633 U1, the U.S. Patent application no. 18/806,925, and in Alkin, B., Fürst, A., Schmid, S., Gruber, L., Holzleitner, M., and Brandstetter, J. Universal physics transformers. arXiv preprint arXiv:2402.12365, 2024., the contents of which are incorporated herein by reference. In certain embodiments, the encoder, decoder, and approximator components are enriched with multi-branch transformers to model microscopic properties of single- or multi-physics systems by tightly coupling the different physics phases within "main-branches". Additionally, auxiliary "off-branches" are added to directly model macroscopic insights by retrieving information from the microscopic simulation state and refining it within the off-branch.

Both new modeling paradigms will be described in more detail in the following:

**Physics Representation**

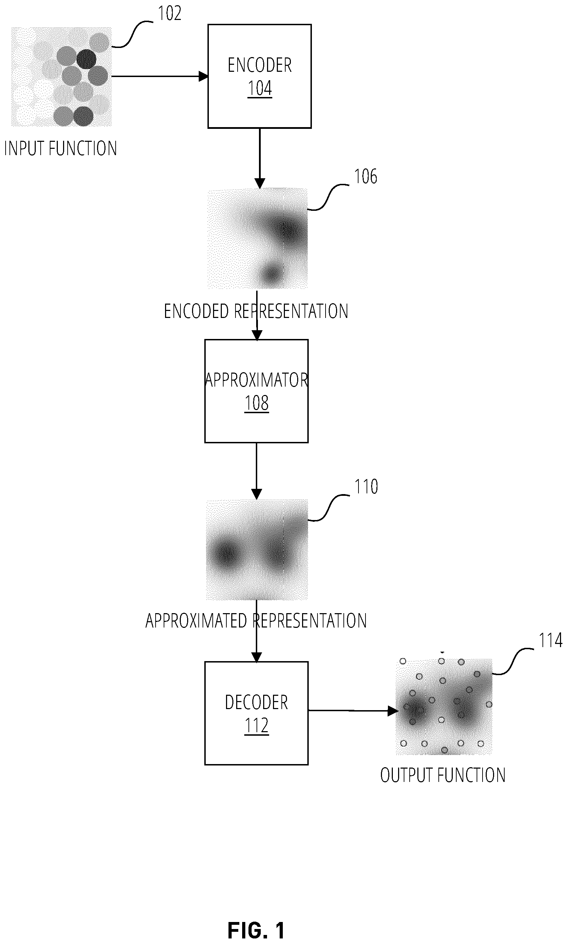

FIG. 1 illustrates a schematic block diagram of a physics representation in accordance with one embodiment. In the illustrated embodiment, the Lagrangian discretization of DEM is modeled as an assumed underlying continuous field. The encoder 104 in FIG. 1 encodes the input function 102 into an encoded representation 106. The approximator 108 maps the encoded representation 106 into an approximated representation 110 that can be decoded at any specified spatial location $j'$. Simultaneously, macroscopic behavior is directly modeled as additional auxiliary fields.

Training such a deep-learning surrogate may involve an orders of magnitude coarser timescale than what a classical solver requires to be stable and accurate. For the numerical experiments in this disclosure, the timescale relation is at least $1000\Delta t_{DEM} = \Delta t_{ML}$. For learning the dynamics of particle movement, we use the term displacement for the difference of positions $r_i$ from $t_{ML}$ to $t_{ML} + \Delta t_{ML}$. In the following, we use "transport" to denote the integrated particle movement over multiple $\Delta t_{ML}$.

The illustrated embodiment models the Lagrangian discretization of DEM as a continuous field in a compressed latent space, leveraging the insight that the effective degrees of freedom of physical systems is often much smaller than its input dimensionality. Therefore, we assume that there exists some underlying field that describes the particle displacements in a DEM simulation and learn this underlying field over the whole domain instead of a displacement per particle. However, particle displacements can fluctuate depending on their exact position within the bulk of the material. Such fine-grained details can be lost when going to a field-based representation which smoothes out these variations. This makes field-based models unable to move particles accurately around in space, which would be required to get macroscopic insights into the simulation dynamics.

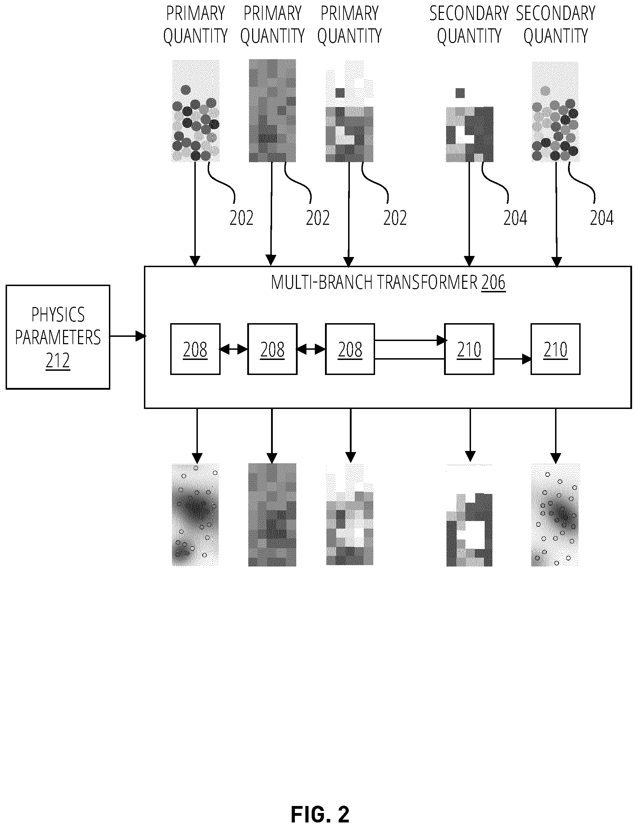

To circumvent this issue, the embodiment comprises additional auxiliary fields that model the macroscopic insights directly instead of calculating them in post-processing from the particle locations. For example, by modeling the accumulated particle movement over a long period of time via a "transport" field, we can learn macroscopic properties directly instead of integrating short-term movements which would require precise prediction of the fluctuations thereof. This is visualized in FIG. 2.

Even over such a large time step, the evolution of a flow and its properties at each point is mainly determined by the field values in a nearby, bounded subdomain which grows with the the step size, and hardly influenced by very distant points. This behavior can be resembled by the attention mechanism of transformer networks.

**Multi-Branch Neural Operators**

FIG. 2 illustrates a schematic block diagram of a multi-branch neural operator implemented as a multi-branch transformer 206 in accordance with one embodiment. In the illustrated embodiment, the multi-branch neural operator is a family of deep-learning architectures that processes multi-physics quantities and can distinguish between primary quantities 202 used to model the core physics, and secondary quantities 204 used to predict additional desired quantities, both modeled as fields. The quantities come, e.g., from DEM simulations with coupled particles and fluid, which the architecture handles using specialized encoders 104 and decoders 112. All modules processing the primary quantities 202, namely the main branches 208 in FIG. 2, influence each other. In contrast, the modules that process secondary quantities 204, namely the auxiliary branches 210, are independent, and use the tokens from the main branches 208 as additional information but cannot affect them.

Classical solvers can create full simulations via precisely updating microscopic properties such as the particle positions at extremely high time resolution, with optional coupling to, e.g., a fluid phase, which is updated with similar precision and timescale. Similarly, embodiments of NeuralDEM aim to extract the physical dynamics and simulation state updates from the microscopic properties also used in classical solvers, which we call "mainphase(s)" where each main-phase is processed by one main branch 208 transformer. Using an example of a particle-fluid coupled simulation, one main branch 208 predicts particle displacements, while a second main branch 208 predicts fluid velocities and pressures. All main branch 208 are tightly coupled via frequent information exchange during the model forward pass.

However, neural operators are typically not able to predict microscopic properties, such as the particle displacements, accurately enough because neural operators are not as precise as classical solvers and operate on much coarser time

resolution. It is therefore not feasible to exclusively rely on an accurate prediction of these microscopic properties in the main branches. Creating simulations by moving initial particle positions according to the predicted displacements would quickly result in unphysical states (e.g., overlapping particles) and becomes inaccurate.

Thankfully, the insights that a classical solver can provide into the physical dynamics are rarely on a microscopic level and more often on a macroscopic level, where the macroscopic properties can be extracted from the microscopic results of the classical solver. Motivated by this intuition, we introduce additional off-branches, also referred to as auxiliary branches, which are trained to model macroscopic processes such as particle mixing or particle transport directly during training. Similar to classical solvers, where the macroscopic process does not influence the microscopic updates, off-branches do not influence any of the main-branches. Instead, each off-branch creates its predictions by repeatedly processing its own data, as well as retrieving information from the microscopic state of the main-branches (without influencing them).

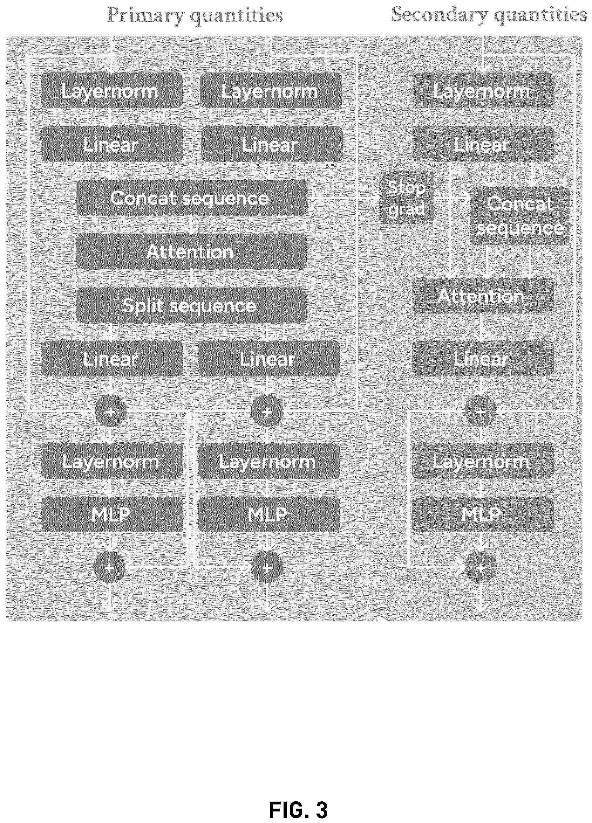

FIG. 2 shows a corresponding multi-branch transformer 206. Generally, multi-branch transformers 206 comprise multiple branches: one or more main branches 208 and one or more auxiliary branches 210, also referred to as off-branch(es). In a preferred embodiment, each branch comprises a stack of transformer blocks where weights are not shared between branches. Each branch operates on a set of so-called tokens, which are obtained by embedding the input into a compressed latent representation. Main-branch(es) concatenate all tokens before each attention operation, allowing interactions between them, followed by splitting tokens again into the different branches, akin to multi-modal diffusion transformer (MMDiT) blocks. Additionally, multi-branch transformers can include arbitrary many off-branches, where the self-attention is replaced by a cross-attention which uses only its own off-branch tokens as queries and concatenates its own off-branch tokens with the main-branch tokens to use as keys and values. This roughly corresponds to simultaneous self-attention between the off-branch tokens and crossattention between off-branch and main-branch tokens. No gradient flows through the cross-attention back to the main-branch tokens. Off-branches may be implemented via a modified diffusion transformer block. A schematic architecture is illustrated in FIG. 3.

In our numerical experiments, we consider temporally evolving systems of multiple fields. Each input at time $t$ $u_i^t$ consists of $h = 1, \dots, M$ fields, where the hth field at timestep t is denoted as $u_i^{h,t}$. Each field is modeled by one branch of the multi-branch transformer. We create datasets of function pairs that are evaluated at $K$ and $K'$ input and output positions ( $u_{i,j}^{h,t}$ $v_{i,j'}^{h,t+\Delta t}$ ) and train all $M$ branches in parallel

to map $u_{i,j}^{h,t}$ to the target $v_{i,j'}^{h,t+\Delta t}$. Each branch of the multi-branch transformer consists of $M$ encoders $E^h$, $M$ approximators $A^h$, and $M$ decoders $D^h$.

$$\mathcal{E}^h : u_{i,j=1,\dots,K}^{h,t} \in \mathbb{R}^{K \times d} \xrightarrow{\text{embed}} \mathbb{R}^{K \times d_{\text{hidden}}} \xrightarrow{\text{multi-branch transformer}} z_i^{h,t} \in \mathbb{R}^{n_{\text{latent}} \times d_{\text{hidden}}}$$

$$\mathcal{A}^h : z_i^{h,t} \in \mathbb{R}^{n_{\text{latent}} \times d_{\text{hidden}}} \xrightarrow{\text{multi-branch transformer}} z_i^{h,t+\Delta t} \in \mathbb{R}^{n_{\text{latent}} \times d_{\text{hidden}}}$$

$$\mathcal{D}^h : (z_i^{h,t+\Delta t}, y_{i,j'=1,\dots,K'}^h) \xrightarrow{\text{perceiver decoder}} \hat{v}_{i,j'=1,\dots,K'}^{h,t+\Delta t} \in \mathbb{R}^{K' \times d} \ .$$

## Scalar Parameter Conditioning

Physical simulations often require various scalar parameters such as material properties (e.g., friction or particle size) or geometry variations (e.g., slope angles or outlet width) to define the simulation properties. It is vital to provide these scalars also to the machine-learning model to produce accurate results. A common way to do this is by feature modulation which scales and shifts intermediate feature activations based on a vector representation of the scaler parameters. As certain embodiments of NeuralDEM are built on a transformer architecture, we use DiT-style modulation which scales, shifts and gates the activations of each attention and MLP block based on a learned vector representation of the scalar parameters. This form of conditioning allows NeuralDEM to generalize across geometries and across non-trivial particle-particle interactions by condition on respective variables.

A particular intriguing property of this conditioning mechanism is that it allows us to condition on parameters that describe only the macroscopic material behavior. For example, our model can be conditioned on the measured parameters, like the internal friction angle or the flow function coefficient from a shear cell device, instead of requiring the microscopic friction parameters necessary for simulating with a classical DEM solver (e.g., particle sliding friction coefficient). In practice, this allows us to simulate any material by simply using a shear cell to determine its friction angle. In contrast, for classical solvers, one would need to estimate the microscopic friction parameters of the material using a calibration procedure in order to simulate it, which is tedious, error prone and often inaccurate.

## Flexible Model Architecture for Variable Simulation Use-Cases

As physical simulations exhibit a broad range of dynamics, and relevant macroscopic insights can vary drastically depending on the use-case, our multi-branch transformer architecture should be seen as a flexible framework that enables various use-cases instead of a "set in stone" architecture. Components can become redundant in certain settings, or special use-cases could require additional components. For example, in simulations with laminar or pseudo-steady dynamics, the whole simulation is fully specified by the initial state, making encoding subsequent states and interaction between branches redundant. However, in very unsteady systems all components of the multi-branch transformer architecture are very much necessary to produce accurate time evolution as slightly different initial states can lead to vastly different instantiations of dynamics, which requires a physically accurate state at each timestep and interactions between the states of different branches.

Additionally, the initial encoding of physics phases benefits from specialized designs, depending on the input data. For irregular grid data (e.g., particles), we use the supernode pooling from UPT which aggregates information around particles via message passing to so-called supernodes, which are randomly selected particles. Fluid phases are typically represented via regular grid data, which is computationally more efficient and allows efficient coupling to e.g. particle simulations. For regular grid data, we use the vision transformer patch embedding which splits the input into nonoverlapping patches and embeds them using a shared linear projection.

Finally, decoding is performed using the same architecture for both particle and grid data, using a perceiver-based neural field decoder, which is queried at locations $y_{i,j}$=1,...,$K'$ in parallel. This type of decoding first embeds query locations to be used as queries for the perceiver cross-attention and uses the latent tokens as keys and values. This results in a point-wise evaluation of the latent space based on the query position, which can be efficiently parallelized.

Certain embodiments employ a standard pre-norm vision transformers architecture where each branch of the multi-branch transformer corresponds to a single vision transformer. The total number of blocks is evenly distributed across encoder, approximator and decoder.

## Concrete Examples

The concepts disclosed in connection with certain embodiments herein are tested and demonstrated in the context of concrete, workable examples in the following. We test NeuralDEM and demonstrate its capability to picture various transport processes, e.g., mass, species, residence time, mixing, in two scenarios, both of which are simulated with several 100,000 DEM particles:

1. Slow and pseudo-steady hoppers with varying hopper angles, internal friction angles and flow regimes
2. Fast and transient fluidized beds with varying inflow velocities

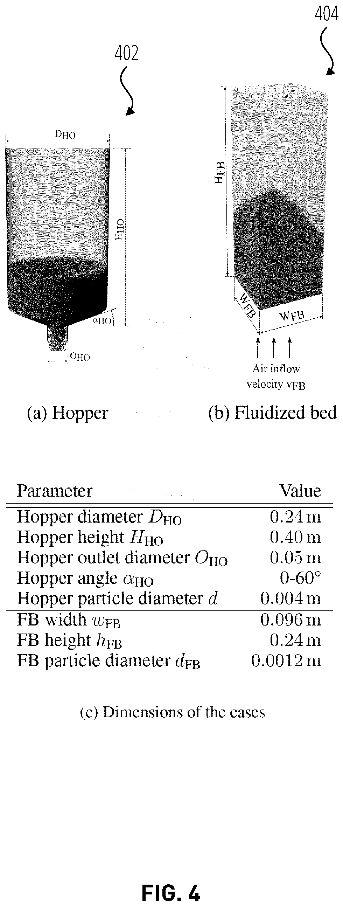

FIG. 4 illustrates an exemplary hopper 402 and an exemplary fluidized bed reactor 404 along with their corresponding dimensions as examples of physics parameters 212.
The following table lists the dataset properties:

| Name | Simulation method | #Particles | #CFD cells | Variability |
|---|---|---|---|---|
| Hopper | DEM | 250k | - | Hopper angle, material friction |
| Fluidized bed | CFD-DEM | 500k | 160k | Fluid inlet velocity |

In both scenarios, we investigate the correct physics modeling of e.g., outflow ratios, residency time, mixing ratio, and others. We observe that NeuralDEM generalizes to unseen parameter choices, and that NeuralDEM produces faithful physics simulations for long time horizons. Experiments have shown that an 850-million parameter NeuralDEM model is able to physically-correctly model coupled CFD-DEM fluidized bed reactors of 160,000 CFD cells and 1700,000 DEM particles for trajectories of 30 seconds, which amounts to 2,400 machine-learning timesteps. These findings will open many new doors to advanced engineering and much faster process cycles. We evaluate NeuralDEM on different metrics:

1. Effectiveness of field-based modeling with respect to macroscopic quantities. We extract and compare emerging macroscopic physics phenomena.
2. Scalability to industry relevant simulation sizes. We train on simulations with up to half a million particles.
3. Physically accurate time extrapolation. We show that our models can faithfully model dynamics for long-time horizons - in a fraction of the time that a classical solver would take.
4. Generalization to unseen regions in the design parameter space.

## Example 1: Hopper

Hoppers are industrially used for short as well as long term storage of particulate material, showcasing slow and pseudo-steady macroscopic behavior. DEM is the preferred method since the air around the particles can usually be neglected due to the slow velocities in the system. In our experiments, the hopper 402 geometry, as shown in FIG. 4, is filled with 250,000 particles, which gradually exit the domain over the simulation duration when the hopper 402 empties. Timestepping of DEM solvers strongly depends on particle size as well as particle properties. A timestep of 10 $\mu$s is required for the tested numerical experiments with LIGGGHTS.

We consider hopper simulations, where we create a dataset of 1,000 simulations which are split into 800/100/100 for train/validation/test split respectively. The hopper 402 is initially filled with particles (outlet is closed) which amounts to roughly 250,000 grains on average (particle counts can vary based on the outlet slope $\alpha_{HO}$). Then the outlet at the bottom of the hopper 402 is opened and grains start to flow out. By default, we do not refill any new particles into the hopper 402, but consider an operation mode where material is continuously refilled further below. Different simulations in the dataset vary hopper geometry and particle friction as specified in the following table, which includes exemplary physics parameters 212:

| Name | Description | Range | Sampling |
|---|---|---|---|
| $\alpha_{HO}$ | Angle of the slope towards the outlet | [0°, 60°] | LHS |
| $\mu_s$ | Particle sliding friction | [0.05, 1.00] | LHS |
| $\mu_r$ | Particle rolling friction | [0.00, 0.50] | LHS |
| $\theta$ | Angle of internal friction | evaluated | - |
| ffc | Flow function coefficient | evaluated | - |

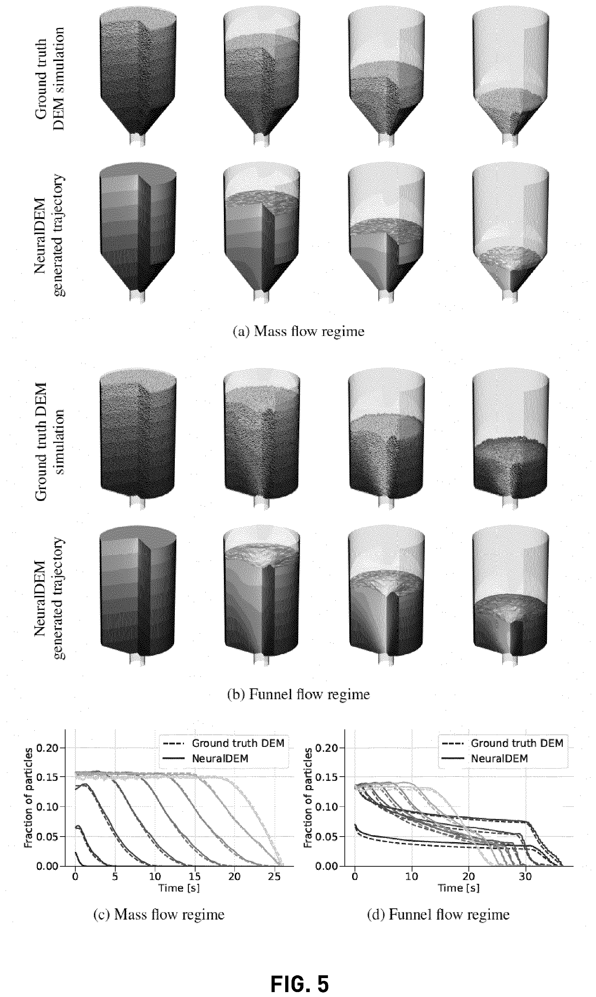

This variability in simulation parameters results in different flow regimes ("funnel flow" or "mass flow") where the dynamics are slow and pseudo-steady. In funnel flow, particles primarily move down a funnel above the outlet, whereas in mass flow, material moves uniformly down towards the outlet, as shown in FIG. 5.

FIG. 5 illustrates a visualization of a NeuralDEM-generated trajectory versus the DEM simulation. Different colors indicate different initial particle layers. Emerging funnel and mass flow regimes are clearly visible. In mass flow (a), mass moves uniformly down towards the outlet. In funnel flow (b), particles primarily move down a funnel above the outlet. The fractions of colored material over time are shown for (c) mass flow regime and (d) funnel flow. In the funnel flow regime, particle layer inversion happens, i.e., particles from higher layers overtake particles from the lower layers through the funnel. This emerging macroscopic phenomena is perfectly modeled by NeuralDEM.

Each simulation is run to cover 40 physical seconds at most (the simulation is stopped if no particles remain in the hopper 402). Snapshots are stored in 0.1 second intervals (resulting in 400 ML timesteps $\Delta t_{ML}$) which is the data that NeuralDEM models are trained on. The DEM solver requires 10,000 timesteps per 0.1 physical seconds and a single simulation takes roughly 3 hours on 16 CPUs. We additionally evaluate the parameters of each simulation in a shear cell to get its internal friction angle $\theta$ and flow function coefficient ffc to use it as conditioning instead of the microscopic friction parameters (see further below).

The following macroscopic properties of hopper simulations are of interest to practitioners:

- Peak outflow rate: How many particles exit the hopper 402 within a certain timeframe at most?
- Drainage time: How long does it take to empty the hopper 402?
- Residual material: How much material got stuck inside the hopper 402 after full drainage?
- Flow regime: Does the material exhibit mass flow or funnel flow?
- Visualization: How does the simulation look like?
- Residence time: How long are certain particles inside the simulation?

All these macroscopic properties emerge from the microscopic particle-particle interactions modeled by DEM. To re-generate these emerging phenomena with NeuralDEM, we train our models to predict three auxiliary fields at each timestep of the simulation: an occupancy field, a transport field and the residence time. First, the occupancy field classifies whether an arbitrary position within a rectangular volume around the hopper 402 is occupied, teaching the model which areas are filled with particles. The occupancy field allows us to calculate an outflow rate by evaluating the occupancy field with the particle positions of the initial packing and subtracting the number of occupied positions from $t_{ML}$ and $t_{ML} + \Delta t_{ML}$. Similarly, we can extract the drainage time by repeatedly checking if positions above the outlet are still occupied and the residual material by evaluating how many of the initial particle positions are occupied after the hopper 402 is drained. Second, the transport field is trained by predicting the initial position of each particle, which corresponds to the cumulative displacement of each particle across all previous timesteps, enabling macroscopic modeling of particle movement over long time horizons. This allows us to model insights into the flow regime and visualize the simulation by evaluating the transport field of occupied positions. Finally, the residence time of each particle models the time it takes each particle to exit the hopper 402 and can be used to easily identify stale regions.

Multi-branch neural operator architecture for hopper experiments

The considered hopper simulations exhibit slow and pseudo-steady dynamics, resulting in a state that is well-defined from the scalar input parameters (timestep, particle friction, hopper angle) alone. Therefore, it is neither necessary to encode the previous state nor to have interactions between branches, as the scalar input parameters already provide full information about the state to all branches. Therefore, we opt for a decoder-only architecture consisting of a single transformer block per branch that starts from 32 static learnable latent tokens and prepares them for decoding via a perceiver cross-attention block that takes positional embeddings as queries and uses the latent tokens as keys and values. Both the transformer and the cross-attention block use DiT modulation to incorporate the scalar parameters (timestep, $\alpha_{HO}$, $\mu_s$ and $\mu_r$). The whole model consists of 50 million parameters.

We train models in the hopper setting for 10,000 updates using a batchsize of 256, a peak learning rate of 1e-4 which is warmed up for 1,000 updates followed by a decaying cosine schedule afterwards. The loss is summed for all branches and LION is used as optimizer.

Flow regime and visualization via occupancy and transport field

To evaluate the macroscopic modeling of the flow regime inside the hopper 402, we use the transport field and evaluate it at the occupied positions as defined via the occupancy field. We bin the z coordinate of the transport prediction into 8 bins which results in "stripes" of particles at the initial timestep. These stripes then evolve in time as particles flow out. By evaluating the volume of each stripe at every timestep, we get detailed information on the different emerging flow regimes in the hopper 402.

In the mass flow regime, as shown in FIG. 5a, material flows to the outlet quite uniformly, resulting in a steady flow and first in-first out operation. NeuralDEM can model this behavior accurately, as visualized in FIG. 5c, where layer after layer leaves the hopper. Contrary, in the funnel flow regime, as shown in FIG. 5b, the material primarily moves down a funnel above the outlet. This results in a layer inversion, as visualized in FIG. 5d, meaning particles from higher layers overtake particles from the lower layers through the funnel and the layers higher up in the hopper 402 will empty first. These emerging macroscopic phenomena are perfectly modeled by NeuralDEM as well.

Notably, NeuralDEM exclusively models fields, which allows us to evaluate transport and occupancy at arbitrary positions with arbitrary resolution. For example, in the evaluations of this section, we use a tetrahedral grid with 80k cells. Our model can seamlessly make predictions thereof despite seeing only particle positions during training.

Outflow rate, drainage time and residual material via occupancy field

The occupancy field defines the occupied volume of the remaining mass in the draining hopper. Given an initial packing, we can evaluate the occupancy field at the initial positions of each particles and track the number of occupied positions over the whole simulation to then create predictions of outflow rate, drainage time and residual material.

Occupancy field: To define whether or not a position is occupied, we introduce a hyperparameter that defines a radius around each particle position. All positions within this radius are considered occupied whereas positions that are not within the radius of any particle are considered unoccupied. We choose the radius to be larger than the particle radius to avoid classifying empty spaces between densely packed spherical particles as unoccupied.

Outflow rate: The outflow rate can simply be calculated by subtracting the number of occupied positions at time t from that one timestep later at $t + \Delta t_{ML}$. To avoid fluctuations due to the burn-in and ending phase of the simulation, we calculate the outflow rate as the average outflow starting from timestep 50 (5 s) over a 100 timestep (10 s) duration and normalize it by the initial particle count.

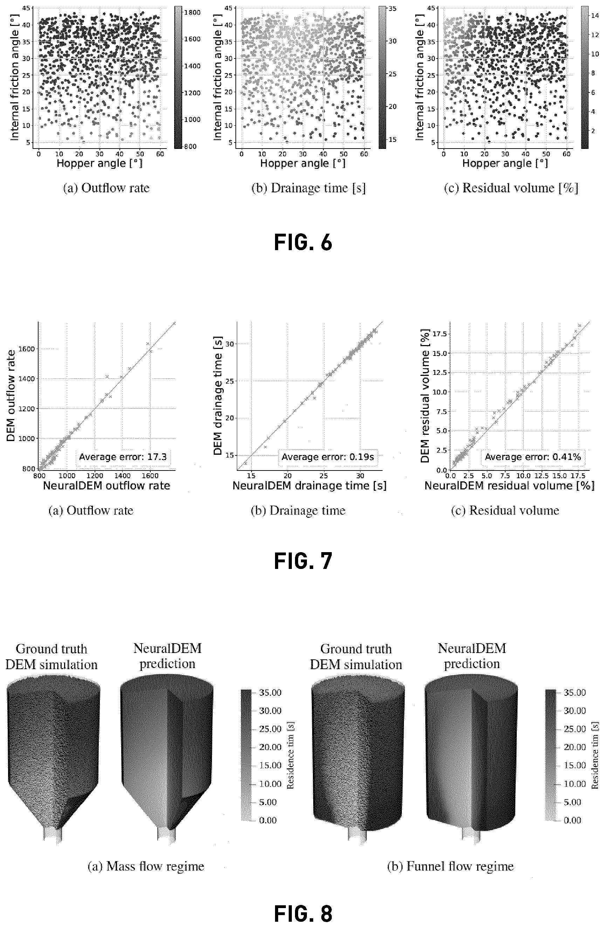

The ground truth over the whole dataset is visualized in FIG. 6a. FIG. 6 illustrates the distribution of macroscopic measurements over the whole DEM generated hopper dataset. Combinations of different geometry and friction parameters lead to different simulation behaviors.

The respective NeuralDEM predictions are shown in FIG. 7a. FIG. 7 illustrates macroscopic simulation insights from the predicted occupancy field. The NeuralDEM model can accurately capture macroscopic measurements from the learned dynamics.

Drainage time: We consider the hopper 402 to be "drained" by specifying a threshold of particles that are located above the outlet ("are falling down") for both classical DEM and NeuralDEM generated trajectories. This definition is necessary as material gets stuck on the outlet slope if it is very cohesive or if the slope is flat. To evaluate the drainage time of the NeuralDEM model, we query the occupancy field at the particle positions of the initial packing above the outlet until the number of occupied positions is less than the specified threshold. The drainage time obtained when running numerical DEM simulations is visualized in FIG. 6b. Further, the NeuralDEM predicted drainage time is visualized in FIG. 7b. The NeuralDEM predicted drainage time shows high agreement with the drainage time of the DEM simulation. We set the threshold of particles above the outlet to 64 where other thresholds like 32 or 128 result in almost the exact same behavior.

Residual volume: Once the hopper 402 is drained, the number of particles that remain in the hopper 402 (due to a flat outlet slope or high friction) defines the residual particle count. As the volume of the hopper 402 fluctuates due to different outlet slopes shrinking/expanding the volume, we normalize the residual particle count by the initial particle count to predict the residual material as percentage of the total particle count. FIG. 6c visualizes the ground truth (DEM) values and FIG. 7c the NeuralDEM predictions.

Residence time

Another interesting quantity that emerges at macroscopic level is residence time, i.e., how long does it take each particle to exit the hopper 402. Therefore, we predict the number of timesteps that each particle resides within the hopper 402. Visualizing the residence time at the initial timestep can identify stale regions and can also be used to characterize the flow regime. We show the initial frame of the residence time prediction for different flow regimes and stale regions in FIG. 8.

FIG. 8 illustrates a visualization of a NeuralDEM generated material residence time versus the DEM simulation for (a) mass flow regime and (b) funnel flow regime. The darker a region is the longer the material in that spot stays inside the hopper 402. While the hopper 402 in the mass flow regime shows a smooth transition from bottom to top, the one with funnel flow shows clear stagnation zone in the bottom with high residence time. Both cases are accurately predicted by Neural DEM.

Generalization capabilities

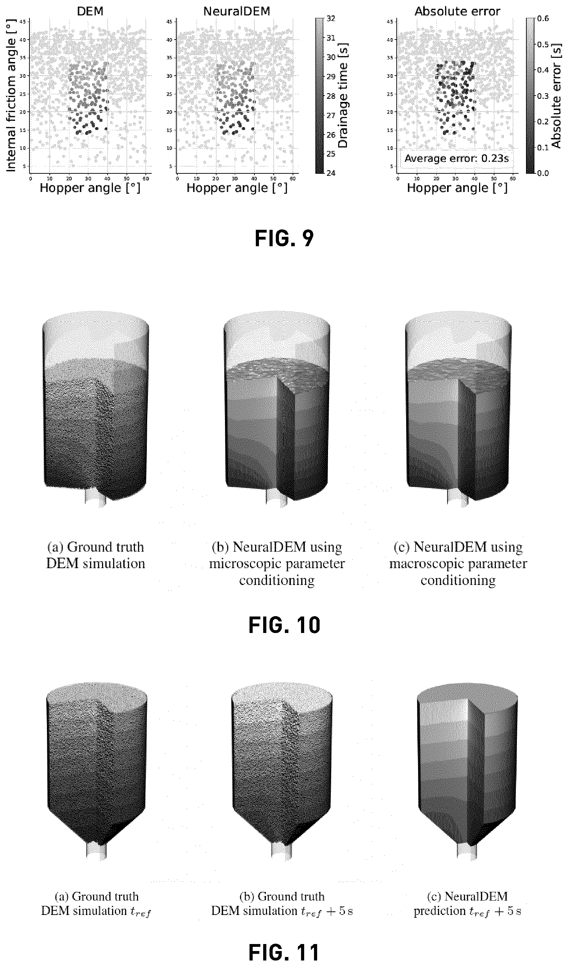

To investigate generalization capabilities of NeuralDEM, we split the dataset by excluding a parameter range of 20 degrees from the training set for testing. In this setting, the NeuralDEM model is evaluated on parameter combinations that are far away from the ones seen during training. Nevertheless, the NeuralDEM model makes reasonable predictions as shown in FIG. 9.

FIG. 9 illustrates generalization to DEM simulation settings that are outside the range seen during training. We exclude all settings in a range of 20 degrees hopper angles and internal friction angles from the training set and evaluate drainage time on the excluded settings. The NeuralDEM model makes reasonable predictions despite lacking those parameter combinations during training. For reference, the average absolute error is 0.19 s when randomly splitting the data into train/test splits. Gray dots indicate training data and colored dots denote simulations used for evaluation only.

Macroscopic parameter conditioning

A common use case in industry is that given some material, one wants to simulate the material in, e.g., a hopper 402 to get insights into its behavior or flow dynamics. However, DEM solvers require a precise specification of the microscopic material parameters, which are often unknown. In order to run a DEM simulation of a material with unknown microscopic parameters, those parameters first have to be inferred via, e.g., a calibration procedure before the DEM simulation of the material can be run. In the case of our hopper simulation, one would need to infer the values of particle sliding and rolling friction.

Instead, the flexible conditioning methodology (as described further above) allows NeuralDEM to condition on macroscopic parameters instead of microscopic ones. To this end, we evaluate the internal friction angle and flow function coefficient in a separate shear cell simulation to characterize the material macroscopically. We then use the internal macroscopic friction angle and flow function coefficient ($\theta$ and ffc) as conditioning to our model instead of the microscopic sliding and rolling friction parameters ($\mu_s$ and $\mu_r$). This allows our model to simulate any given material by simply characterizing it in a shear cell and using the resulting macroscopic friction parameters as input to the model, without needing particle sliding/rolling friction.

The following table shows a quantitative comparison with different conditionings:

| Scalars | | | | NeuralDEM predictive performance | | | | |
|---|---|---|---|---|---|---|---|---|
| $\mu_s$ | $\mu_r$ | $\theta$ | ffc | Drainage error [s] | Residual error [%] | Outflow error | Transport MSE [1e-2] | Residence MSE [1e-3] |
| ✓ | ✓ | X | X | 0.19 | 0.41 | 17.3 | 0.72 | 1.59 |
| X | X | ✓ | ✓ | 0.41 | 0.64 | 44.6 | 2.30 | 4.46 |
| X | X | X | ✓ | 0.78 | 0.80 | 38.6 | 4.48 | 7.78 |
| X | X | ✓ | ✓ | 0.40 | 0.66 | 28.4 | 1.96 | 3.82 |
| ✓ | ✓ | ✓ | ✓ | 0.23 | 0.62 | 17.2 | 0.74 | 1.46 |

The table shows NeuralDEM performance metrics using different scalar conditions in the model. Conditioning on microscopic sliding and rolling friction parameters ($\mu_s$ and $\mu_r$) fully specifies the underlying DEM simulation and leads to the best performances. Conditioning only on the measured macroscopic friction angle ($\theta$) and flow function coefficient (ffc) from a shear cell device can obtain reasonable results while not requiring calibration procedures, i.e., $\mu_s/\mu_r$ are unknown. The measured scalars from the shear cell device provide no additional information and therefore do not improve model performance.

Note that a drop in performance is expected as the microscopic material properties 1:1 reflect the underlying DEM simulation. Nevertheless, the drop in performance is within an acceptable range such that model predictions are still useful, as shown in FIG. 10.

FIG. 10 illustrates a NeuralDEM transport field prediction using microscopic simulation parameters versus macroscopic material parameters. Conditioning on microscopic sliding and rolling friction parameters ($\mu_s$ and $\mu_r$) reflects the underlying DEM simulation exactly and results in accurate agreement of the transport field. However, conditioning only on the measured macroscopic friction angle ($\theta$) and flow function coefficient (ffc) still leads to acceptable accuracy with small deviations. This allows NeuralDEM to work without a calibration routine to get the microscopic parameters on any given material where $\mu_s$ and $\mu_r$ are unknown.

Refilling operation mode

For neural operator modeling, it is difficult to represent particles that are not existing at the initial timeframe. This is due to the typically stochastic nature of the refilling process, and one would need to accurately model this process during inference in order to avoid unrealistic states (e.g., overlapping particles). However, our field-based modeling paradigm allows NeuralDEM to model macroscopic behavior of refilled particles without requiring their accurate positions.

To showcase this setting, we train a NeuralDEM model to predict the evolved transport and residence time when continuously refilling new particles into the hopper 402. As the refilling operation mode can go on indefinitely, the model needs some kind of reference frame to predict "how did particles move w.r.t. the reference frame" and "how long particles have been in the hopper w.r.t. the reference frame". To this end, we sample a random past timestep during training and predict transport and residence time w.r.t. this past timestep. FIG. 11 shows the evolved transport over 50 ML timesteps (5s) in comparison to a ground truth DEM simulation.

FIG. 11 illustrates a NeuralDEM transport field prediction for the hopper case in refilling operation mode versus ground truth DEM simulation. The transport field is initialized at a reference time (a). The ground truth of the 5 s evolved field is shown in (b) and the NeuralDEM prediction in (c). Newly Refilled material since is shown in gray. NeuralDEM can accurately model the transport of material in a hopper in refilling operation mode.

The residence time in the hopper 402 can go to infinity when the NeuralDEM trajectory is rolled out for longer. This happens when material is stuck inside the hopper 402, which the NeuralDEM model cannot predict as it only sees simulations of a fixed maximum duration during training. Conditioning of the residence off-branch to a reference timesteps allows us to periodically reset the reference time during inference and aggregate the residence time predictions before each reset in post-processing.

Runtime: NeuralDEM enables real-time simulations

Simulating a granular flow of 250,000 particles through a hopper 402, with a trajectory spanning 40s or 4 million numerical timesteps, requires 3 hours on 16 cores of high-performance CPUs when using traditional DEM. In contrast, on a single state-of-the-art GPU, the fastest NeuralDEM inference model faithfully reproduces the physics in just 1.4 s. Notably, NeuralDEM requires significantly fewer timesteps compared to the numerical simulation. Further acceleration is achieved through NeuralDEM's field-based output representation, which reduces the number of required output points while still capturing the macroscopic bulk behavior accurately. When processing all 250,000 output points on a single GPU, NeuralDEM inference takes 8 s. Running NeuralDEM on the same 16 CPUs used for the numerical simulation - notably leveraging the benefits of reduced outputs due to field-based representations - results in a trajectory rollout of 41 second. Those inference times are shorter (GPU) than or in the same ballpark (16 CPUs) as the trajectory duration of 40 s, highlighting the feasibility of real-time simulations. While traditional DEM could theoretically be further parallelized, for a certain thread number hardware communication bottlenecks present a limiting factor, and thus further underlines the potential of NeuralDEM.

**Example 2: Fluidized Bed Reactor**

Fluidized bed reactors are characterized by fast and transient phenomena, and are widely used in industry for a variety of processes. Fluidized bed reactors showcase strong interactions of the particles with the surrounding fluid, necessitating an accurate modeling of particles, the gas phase, as well as particle-gas interactions. Thus, modeling approaches need to combine DEM parts with simulations of the surrounding fluid. For data generation, we use a coupled computational fluid dynamics and Discrete Element Method approach also referred to as CFD-DEM method, i.e., CFDEMcoupling which is built upon LIGGGHTS and OpenFOAM. The geometry and dimensions of the setup is sketched in FIG. 4. The fluidized bed reactor 404 is filled with 500,000 particles and the fluid, i.e., air, that is uniformly pushed into the reactor from the bottom is modeled on a grid of 160,000 hexahedral cells. The following numerical experiments are carried out on a fixed-geometry reactor with varying inlet velocities, and we evaluate short-term behavior and long-term statistics. In total, 76 difference inlet velocities sampled uniformly from 0.337ms$^{-1}$ to 0.842ms$^{-1}$ were used. Additionally, 6 different initial random particle packings per inlet velocity were sampled, resulting in 456 CFD-DEM trajectories. The physical duration of one DEM simulation amounts to 5 s, comprising 2 million DEM timesteps and 20k CFD timesteps.
To train the NeuralDEM model, each trajectory is sub-sampled to 300 timesteps, starting from 2 s of the original simulation and sampling every 0.01 seconds, i.e., $\Delta t_{ML} = 0.01$s. The classical solver requires a much finer time resolution where $\Delta t_{ML} = 4000, \Delta t_{DEM} = 40 \Delta t_{CFD}$. We select 60 inlet velocities at random for the training set and the remaining 16 are left for validation, thus obtaining a training set of 360 trajectories and a validation set of 96. For testing long rollouts performance of NeuralDEM, we further generate 4 sequences of physical duration of 28 s and different inlet velocities, where new random initial packings are applied. Those trajectories result in sequences of 2800 timesteps.

Multi-branch neural operator architecture for fluidized bed reactor experiments

Modeling a fluidized bed reactor 404 requires interaction between fluid (CFD component) and particles (DEM component). To this end, we utilize both grid data and particle data as input to the model. As described further above, we use specialized designs for different physics phases. Namely, ViT patch embedding for grid data and UPT supernode pooling for particle data. The number of supernodes and patches can be changed after training, enabling stable training and a flexible choice for generating trajectory rollouts. Rollouts are carried out in autoregressive fashion, where each timestep is used as input for the next timestep. During training, the model receives data from a random timestep t, is conditioned on the inlet velocity, and is supervised with the quantities from timestep $t + \Delta t_{ML}$. The inlet velocity conditioning is performed analogously to the hopper setting, with a DiT modulation. The particle mixing is modeled as a off-branch quantity.
The final model has 852M trainable parameters, with a sequence length of 2,048 tokens for the particle displacement, 2,500 for the fluid velocity and particle solidfraction, and 2,500 for the particle mixing, both with 4 x 4 x 4 patches. The model is trained 126K updates using a batch size of 128, a peak learning rate of 4e-5 which is warmed up for 13K updates followed by a decaying cosine schedule to 1e-7 using LION as optimizer with 0.5 as weight decay. The loss is summed over all the branches.

Modeling the dynamics of the system

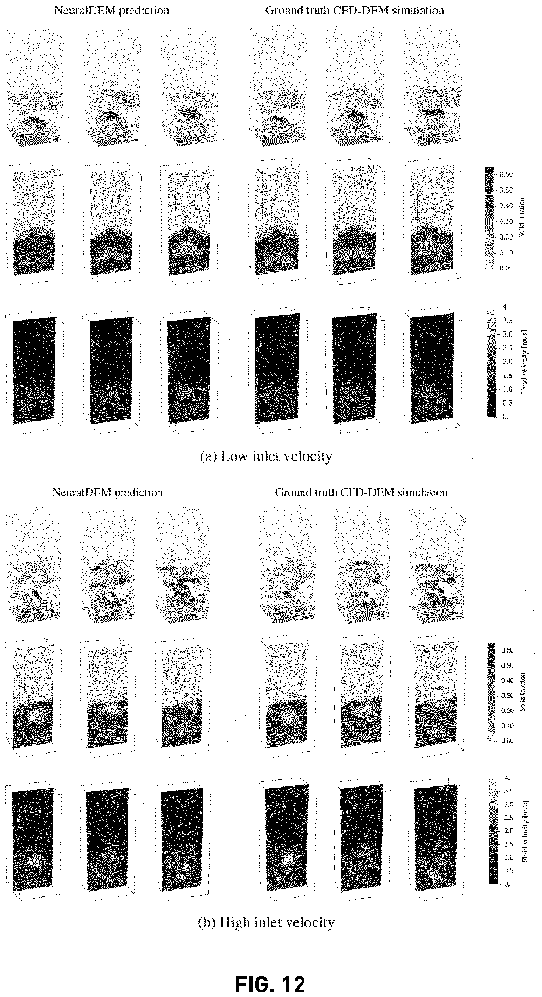

A fluidized bed reactor 404 simulation exhibits fast and transient dynamics with many physically possible trajectories, i.e., fluidized bed reactor trajectories are chaotic. This means that - also for numerical solvers - starting a fluidized bed simulation with different initial particle packings will yield different trajectories. FIG. 12 shows a visual comparison of the isosurface of solid fraction, solid fraction field and fluid velocity for two different inlet velocities. When the two time series are compared to the ground truth snapshots they look very similar, especially the bubble structure visualized by the iso surface on the solid fraction field.

In more detail, FIG. 12 illustrates a visualization of three snapshots taken at 0.06 s, 0.09 s and 0.12 s for two different inlet velocities (a) $0.45 ms^{-1}$ and (b) $0.7 ms^{-1}$. The first row shows iso-surfaces of solid fraction at 0.35 uncovering the emerging bubble structure of fluidized bed reactors 404. The second and the third show the central slice along the y-axis for the solid fraction and the magnitude of fluid velocity, respectively. These snapshots show how NeuralDEM can faithfully reproduce the first few steps of simulation when starting from the same initial conditions.

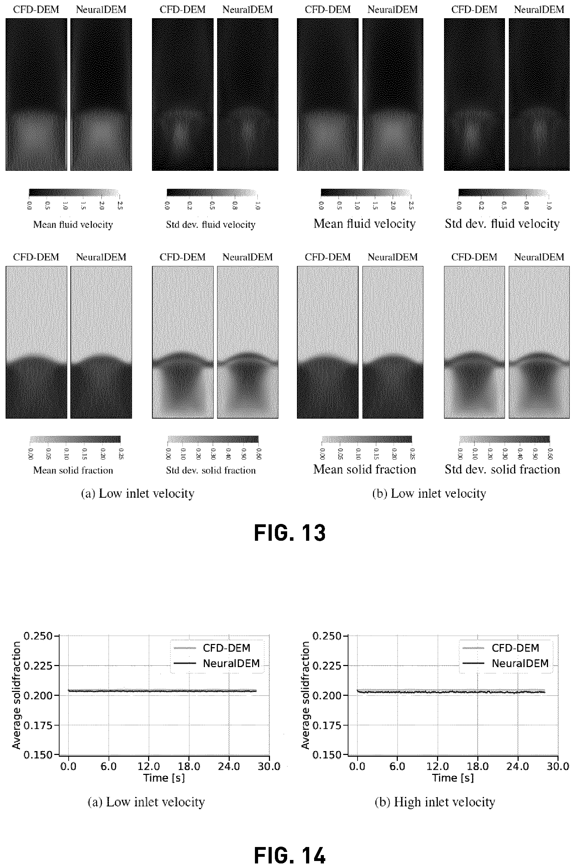

In the limit of long simulation trajectories, different initial packings do not affect the temporal statistics. Due to this phenomenon, we use time-averaged statistics for quantitative comparisons, see FIG. 13 and FIG. 14. Precise comparison is not feasible due to numerical differences that naturally arise during a rollout.

FIG. 13 illustrates a comparison of long-term temporal averaging statistics for two fluid inlet velocities. Slices along the y-axis of the mean and the standard deviation of the solid fraction field and the velocity field are shown. The left image in each group is the NeuralDEM model prediction and the right image the CFD-DEM simulation.

FIG. 14 illustrates that the average solid fraction predicted by the NeuralDEM model is stable over extremely long rollouts that are almost 10 x the length of the 3 s sequences used for training. Notably, although the output of NeuralDEM models a field, the mass of the entire system is preserved almost perfectly. The y-axis ranges from 0.15 to 0.25 to show more detail but the solid fraction can range from 0 to 1.

Notice how, with low inlet velocity, a single bubble of air forms inside the dense particle bed. When the bubble reaches the surface, a ripple-like structure is formed by the particles, clearly displaying their fluidization. With high inlet velocity the behavior is much more unorganized and a complicated bubble structure inside the particle bed arises. NeuralDEM handles both regimes successfully, modeling the organized and structured low-velocity bubble dynamics as well as the chaotic, high-velocity particle interactions, accurately capturing the transitions in flow patterns and complex fluidization behavior across different regimes.

The fluid velocity within the particle bed shows distinct patterns influenced by particle motion and fluid-particle interactions. At low inlet velocity, the fluid flow is relatively stable, with modest spatial gradients around the rising air bubble. Instead, with high inlet velocity, the fluid velocity across the bed is higher compared to the previous case, not only due to the high inlet velocity but also because of the dynamic movement of particles within the bed. These variations result in complex flow fields, with strong fluctuations that are challenging to model. NeuralDEM accurately captures these dynamics and replicates the different velocity profiles for all inlet velocity regimes between the scenarios shown here.

Physics evaluation

NeuralDEM's capability to maintain stability and accuracy over extended simulation periods is essential for realistic modeling of particle-fluid systems. We demonstrate the long-term rollout stability by analyzing the time average solid fraction and fluid velocity field for 2.8 k steps, representing 28 s of physical simulation. The length of the trajectory resulted from a 30 s CFD-DEM simulation, sufficient to determine the long-term statistics. NeuralDEM is not limited to this length and did not show any stability problem up to 100 s. To the best of our knowledge, these are the longest reported stable rollouts in the deep learning-based 3D physical simulation field.

In FIG. 13 we show the mean and variance of the magnitude of the velocity and the solid fraction over time for a given mesh cell. In the figure we display the central slice along the y-axis (aka the depth of the fluidized bed reactor 404). NeuralDEM successfully captures the different long-term behavior of the particles and the fluid when different inlet velocities are used.

Possibly the most crucial property for a physics simulation is mass conservation. In a CFD-DEM simulation, as long as the particles stay within the domain, the overall mass will not change. In FIG. 14 we show how NeuralDEM, although it is not modeling each particle independently, also maintains very good mass conservation for all timesteps, showing no drift in the trajectory.

Mixing behavior

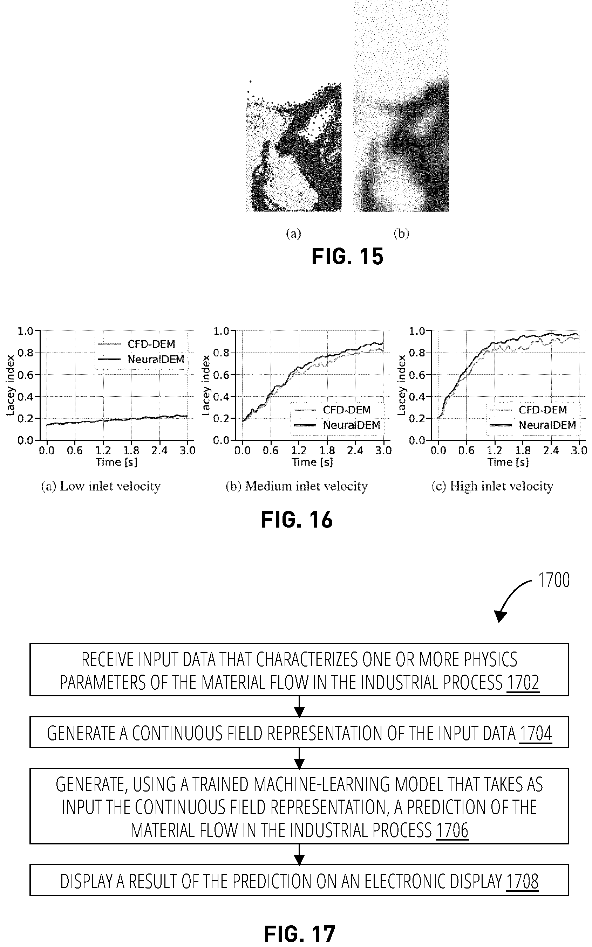

Particle mixing by definition is a particle-associated quantity where each particle either belongs to group A or B. In our numerical experiments, we label particles belonging to group A those that start on the left side of the fluidized bed reactor 404, and particles belonging to group B those that start on the right side. However, when using field-based representations, a faithful modeling of particle mixing is not feasible. Therefore, we introduce the particle mixing concentration field, which defines - for a given spatial location and time - the concentration of particles that belong to group B. Consequently, we discretize the domain using a hexahedron mesh and map the particle information using a Gaussian kernel on that mesh, as shown in FIG. 15.

FIG. 15 illustrates (a) particle-based mixing where the dark particles started from the right of the fluidized bed reactor 404, and (b) field-based concentration obtained using a Gaussian kernel on a mesh.

We use the Lacey mixing index to allow for a quantitative comparison between the model prediction for the mixing concentration field and ground truth simulation data. The Lacey mixing index represents the current state of mixing and can be plotted over time to compare the time evolution of the process. As the particles get more mixed, the Lacey mixing index goes towards 1. As visualized in FIG. 16, NeuralDEM predictions match the characteristics of the ground truth DEM-CFD trajectories over long time horizons.

FIG. 16 illustrates a comparison of the temporal evolution of the Lacey mixing index for three different inlet velocities: (a) 0.36ms⁻¹, (b) 0.55ms⁻¹, and (c) 0.84ms⁻¹. NeuralDEM predictions (blue) match the characteristics of the ground truth DEM-CFD trajectories (orange) over long time horizons. In the low inlet velocity simulation, mixing is slow and the model can very accurately predict the mixing rate. For higher inlet velocities mixing happens more quickly and is more dependent on the precise bubbling. Runtime: NeuralDEM enables real time simulations

Similar to experiment 1, we evaluate NeuralDEM's potential for real time simulations. In contrast to the hopper 402 simulations, the fluidized bed reactors 404 are larger and more complex, requiring roughly 20 times larger neural network architectures. Numerically, when using traditional CFD and DEM methods, the simulation of a fluidized bed reactor 404 of 500,000 particles, with a trajectory spanning 3 s amounts to 12k CFD and 1.2 million DEM timesteps. This requires 6 hours on 64 cores of high-performance CPUs. In contrast, on a single state-of-the-art GPU, the fastest NeuralDEM inference model faithfully reproduces physics in just 11 s. With further speedups via e.g., model parallelization through tensor parallelism and or model quantization, real time inference is within reach.

**Simulation Method**

FIG. 17 illustrates a method 1700 of real-time simulation of a material flow in an industrial process in accordance with one embodiment. In receiving step 1702, method 1700 receives input data that characterizes one or more physics parameters of the material flow in the industrial process. In field representation generating step 1704, method 1700 generates a continuous field representation of the input data. In prediction generating step 1706, method 1700 generates, using a trained machine-learning model that takes as input the continuous field representation, a prediction of the material flow in the industrial process. In displaying step 1708, method 1700 displays a result of the prediction on an electronic display.

**Discrete Element Method (DEM)**

In the following, the relevant core phenomena of DEM are introduced to facilitate the understanding. A more in-depth explanation can be found, e.g., in the textbook Norouzi, H. R., Zarghami, R., Sotudeh-Gharebagh, R., and Mostoufi, N. Coupled CFD-DEM modeling: formulation, implementation and application to multiphase flows. John Wiley & Sons, 2016.

In a system of solid particles with masses $m_i$, radii $r_i$, positions $r_i$ and velocities $v_i$, each of them has to obey Newton's second law:

$$\frac{\mathrm{d}}{\mathrm{d}t} m_i \boldsymbol{v}_i = \boldsymbol{F}_i^{(\mathrm{ext})} + \boldsymbol{F}_i^{(\mathrm{pc})} + \boldsymbol{F}_i^{(\mathrm{pf})}. \tag{1}$$

Particle i experiences forces of external origin, most important gravity $\boldsymbol{F}_i^{(ext)} \approx m_i \boldsymbol{g}$, contact forces with the nearby grains and walls $\boldsymbol{F}_i^{(pc)} = \sum_{j \neq i} \boldsymbol{F}_{i,j}$, and the influence of a surrounding fluid phase $\boldsymbol{F}_i^{(pf)}$ if present and relevant.

The contact force between solid particles i and *j* is commonly approximated with spring-dashpot models for both the normal $\boldsymbol{F}_{i,j}^{(n)}$ and tangential component $\boldsymbol{F}_{i,j}^{(t)}$,

$$\boldsymbol{F}_{i,j}^{(\mathrm{n})} = -k^{(\mathrm{n})} \delta_{i,j}^{(\mathrm{n})} \boldsymbol{n}_{i,j} + \gamma^{(\mathrm{n})} \boldsymbol{v}_{i,j}^{(\mathrm{n})} \tag{2}$$

$$F_{i,j}^{(t)} = \min\left[ -k^{(t)}\delta_{i,j}^{(t)}t_{i,j} + \gamma^{(t)}v_{i,j}^{(t)}, \mu|F_{i,j}^{(n)}|t_{i,j} \right], \tag{3}$$

where the tangential force is limited by Coulomb's friction law. Material properties enter these expressions in terms of the spring stiffnesses $k^{(n,t)}$, damping coefficients $\gamma^{(n,t)}$ and sliding friction $\mu$. $k^{(n,t)}$ give rise to the reaction against normal and tangential overlap $\delta_{i,j}^{(n,t)}$ between two grains, and $\gamma^{(n,t)}$ account for viscous dissipation caused by the normal and tangential relative velocities $v_{i,j}^{(n,t)}$ during contact. While simple geometric shapes such as perfect spheres allow to compute values for the material parameters from measurable properties like Young's and shear modulus, actual, imperfect grains necessitate calibration towards characterization experiments.

The magnitude of the numerical timestep to solve Equation (1) is limited by the requirement to properly resolve contacts between grains. More specifically, the timestep needs to be significantly smaller than the duration of contact of colliding particles ("Hertz time") and the time it takes density waves generated upon impact to travel over the grain surface ("Rayleigh time"). For stiff materials, this often amounts to steps in the range of microseconds.

**Coupled Particle-Fluid Simulations**

Particles will also experience a force from a surrounding fluid phase. While it may be neglected if no significant relative velocities occur, it can be a crucial factor for particle dynamics otherwise. The dominant contributions are usually caused by gradients of the pressure and by the drag force, i.e., the resistance against relative velocity between fluid and grain, so that

$$F_i^{(pf)} \approx -V_i\nabla p + \beta\left(u_f - v_i\right). \tag{4}$$

The drag coefficient $\beta$ depends on the particle size and the local flow conditions. A multitude of empirical correlations can be found in literature to take into account the impact of Reynolds number, particle volume fraction $\alpha_p$, size distribution, etc.

The fluid velocity itself is governed by the filtered Navier-Stokes equations

$$\frac{\partial}{\partial t}\alpha_f + \nabla \cdot \alpha_f u_f = 0 \tag{5}$$

$$\frac{\partial}{\partial t}\alpha_f u_f + \nabla \cdot \alpha_f u_f u_f = \nabla \cdot \sigma_f - f^{(pf)} \tag{6}$$

which differ from their single-phase counterpart in two regards. The presence of particles reduces the locally available volume to a fraction $\alpha_f = 1 - \alpha_p$, and the density of force Equation (4) exerted by the fluid on the particles is felt by the fluid in opposite direction because of Newton's third law. The coupled solution of the CFD Equations (5) and (6) and the DEM Equation (1) gives rise to CFD-DEM simulations.

For a proper definition of the field quantities $\alpha_p$ and $f^{(pf)}$, Lagrangian particle information needs to be mapped onto Eulerian fields. To this end, a filter function $g_l(r)$, e.g., a Gaussian with width $l$, is employed in terms of

$$\alpha_p(r) \equiv \sum_i g_l(|r - r_i|)V_i \tag{7}$$

$$f^{(pf)}(r) \equiv \frac{\sum_i g_l(|r - r_i|)V_i F_i^{(pf)}}{\sum_i g_l(|r - r_i|)V_i}. \tag{8}$$

An analogous definition as Equation (8) can be invoked to define the spatial field distribution of any particle property. As a matter of fact, the target quantities of most particle simulations are not necessarily connected to single-particle properties located exactly at the positions of each grain. Instead, one might be interested in the spatial distribution of, e.g., particle volume fraction, residence time or temperature. Two strategies are available to obtain these fields: (i) One carries out a DEM simulation and postprocesses particle data according to Equation (8). The trajectory and properties of each grain are only needed as an intermediate step for the DEM simulation. (ii) One can try to directly formulate particle EOMs in a Eulerian fashion by filtering the Lagrangian ones and solve them disregarding discrete properties. As demonstrated by the two-fluid model, this can significantly reduce computational costs, but can come with a serious degree of uncertainty because not all particle properties lend themselves to a straight-forward formulation in terms of fields.

Even if the resulting inaccuracies are acceptable, such simulations are still cumbersome because of the restriction to small timesteps (which is also present in a Eulerian formulation) and the lack of a direct relationship between macroscopic behavior and microscopic parameters. Certain embodiments offer an attractive solution to this predicament by neural operators that can be trained with detailed particle data to predict any underlying field quantities in a highly efficient way.

## Neural Operators Learning for Engineering Applications

In recent years, deep learning tools have been extensively integrated into scientific modeling, and have resulted in breakthroughs in, e.g., protein folding, material discovery, or weather modeling. Driven by applications in computational fluid dynamics, deep neural network-based surrogates, most importantly neural operators, have emerged as a computationally efficient alternative. Additional to computational efficiency, neural operators offer potential to introduce generalization capabilities across phenomena, as well as generalization across characteristics such as boundary conditions or coefficients.

Neural operators are formulated with the aim to learn a mapping between function spaces, enabling outputs that remain consistent across varying input sampling resolutions. We assume $\mathcal{U}$, $\mathcal{V}$ to be Banach spaces of functions defined on compact domains $\mathcal{X} \subset \mathbb{R}^{d_x}$ or $\mathcal{Y} \subset \mathbb{R}^{d_y}$, respectively, which map into $\mathbb{R}^{d_u}$ or $\mathbb{R}^{d_v}$. A neural operator $\widehat{\mathcal{G}} : \mathcal{U} \to \mathcal{V}$ approximates the ground truth operator $\mathcal{G} : \mathcal{U} \to \mathcal{V}$.

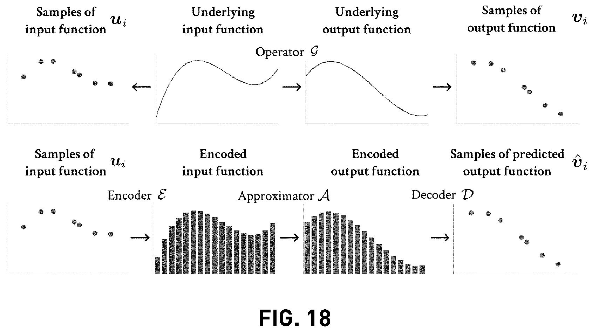

When training a neural operator $\widehat{\mathcal{G}}$, a widely adopted approach is to construct a dataset of $N$ discrete data pairs $(u_{i,j}, v_{i,j'})$, i = 1,...,$N$, which correspond to $u_i$ and $v_i$ evaluated at spatial locations $j = 1, \ldots, K$ and $j' = 1, ..., K'$, respectively. Note that $K$ and $K'$ can, but need not be equal, and can vary for different i, which we omit for notational simplicity. FIG. 18 (first row) shows the operator learning problem, i.e., the mapping of an input function $u_i$ to an output function $v_i$ via an operator $\mathcal{G}$. The functions are given via $K$ and $K'$ discretized input and output points, respectively. On this dataset, $\widehat{\mathcal{G}}$ is trained to map $u_{i,j}$ to $v_{i,j'}$ via supervised learning, as illustrated in FIG. 18 (bottom row), where rj is composed of three maps: $\widehat{\mathcal{G}} := \mathcal{D} \circ \mathcal{A} \circ \mathcal{E}$, comprising the encoder $\mathcal{E}$, the approximator $\mathcal{A}$, and the decoder $\mathcal{D}$. First, the encoder $\mathcal{E}$ transforms the discrete function samples $u_{i,j}$ to a latent representation of the input function. Then, the approximator $\mathcal{A}$ maps the latent representation to a representation of the output function. Lastly, the decoder $\mathcal{D}$ evaluates the output function at spatial locations $j'$. The neural network $\widehat{\mathcal{G}}$ is then trained via gradient descent, using the gradient of, e.g., a mean squared error loss in the discretized space $\mathcal{L}_i = \frac{1}{K'} \sum_{j'} ||\hat{v}_{i,j'} - v_{i,j'}||_2^2$, where $|| \, ||_2$ is the Euclidean norm.

FIG. 18 illustrates how neural operators aim to learn a mapping between function spaces, enabling outputs that remain consistent across varying input sampling resolutions. The approximation of rj is ideally independent from the number of sampled input points, and approximates the output function for an arbitrary number of points.

For temporally evolving systems, we assume the Banach spaces of functions to be equal, i.e., $\mathcal{U} = \mathcal{V}$, where models are trained on next-step prediction $u_{i,j}^t \to v_{i,j'}^{t'}$. To fully evolve a system after training, the model is then applied repeatedly in autoregressive fashion, i.e., every prediction serves as new input.

## Discretization Convergence

Neural operators are well suited to describe the evolution and interaction of physical quantities over space and time, i.e., continuously changing fields. Most notably, since the solutions are continuous fields, the mapping should neither depend on $K$, the number of "input" locations, nor on $K'$, the number of decoded "output" locations. The property that neural network outputs remain consistent across different input sampling resolutions is referred to as discretization convergence. Neural operators are proven to be discretization convergent in the limit of mesh refinement, meaning they converge to a continuum operator in the limit as the discretization is refined. In theory and if properly designed, neural operators can be evaluated at any data discretization. Nevertheless, there is a minimum threshold for the number of points needed for accurate representation. However, strong evidence indicates that neural networks can capture physical phenomena effectively without requiring the same level of fine-grained discretization as traditional numerical methods. Neural operator architectures need to ensure discretization convergence of their components. When encoding the discretized input function, popular choices to preserve discretization convergence are graph neural operators, transformers or combinations thereof. For decoding, recent works have shown that $\mathscr{D}$ can be considered as neural field, which allows for pointwise evaluation at the output grid or output mesh.

**Deep Learning for Particulate Systems**

While most state-of-the-art neural operator approaches are predominantly designed for geometrically simple domains with regular grids, neural operator formulations for particle- or mesh-based dynamics remain limited. In such cases, graph neural networks (GNNs) with graphbased latent space representations are a prevalent approach to build neural surrogates. Often, predicted node accelerations are numerically integrated to simulate the time evolution of multi-particle systems. For the modeling of granular dynamics, certain approaches predict contact forces when inputting microstructures of grain packings. Similarly, some approaches estimate contact forces in compressed granular assemblies. Some approaches introduce Boundary-GNNs to model granular flows through hoppers, rotating drums, and mixers. All these models are limited by the number of particles, and operate on 10k-20k particles at most, although often much less.

GNNs inherently possess a strong inductive bias for Lagrangian dynamics, which, however, presents a significant downside since the number of nodes, and thus the computational complexity grows with the number of Lagrangian particles. Thus, computational complexity gets quickly infeasible for an increasing number of particles. However, motivated by recent successes in latent space generative modeling, latent space modeling has emerged as a new modeling paradigm in neural operator learning. In the present disclosure, we follow the argumentation that neural operators large model complexity are powerful enough to capture inherent field characteristics when applied to Lagrangian or multiphysics simulations. For DEM simulations, we argue that those field characteristics need not be explicitly present in the training data, rather they might emerge from the bulk behavior of the particulate systems.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more Processors and one or more storage devices or may be a distributed computer system (e.g., a cloud computing system with one or more Processors and one or more storage devices distributed at various locations, for example, at a local client and/or one or more remote server farms and/or data centers). The computer system may comprise any circuit or combination of circuits. In one embodiment, the computer system may include one or more Processors which can be of any type. As used herein, Processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics Processor, a digital signal Processor (DSP), multiple core Processor, a field programmable gate array (FPGA), or any other type of Processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more Memory elements suitable to the particular application, such as a main Memory in the form of random access Memory (RAM), one or more hard drives, and/or one or more drives that handle removable media such as compact disks (CD), flash Memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a Processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH Memory, having electronically readable control signals stored thereon, which cooperate (or are capable of cooperating) with a programmable computer system such that the respective method is performed. Therefore, the digital storage medium may be computer readable.

Some embodiments comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise a computer program for performing one of the methods described herein, stored on a machine-readable carrier.

A further embodiment is a computer program having a program code for performing one of the methods described herein, when the computer program runs on a computer.

A further embodiment is a storage medium (or a data carrier, or a computer-readable medium) comprising, stored thereon, the computer program for performing one of the methods described herein when it is performed by a Processor. The data carrier, the digital storage medium or the recorded medium are typically tangible and/or non-transitory.

A further embodiment is an apparatus as described herein comprising a Processor and the storage medium.

A further embodiment is a data stream or a sequence of signals representing the computer program for performing one of the methods described herein. The data stream or the sequence of signals may, for example, be configured to be transferred via a data communication connection, for example, via the internet.

A further embodiment is a processing means, for example, a computer or a programmable logic device, configured to, or adapted to, perform one of the methods described herein.

A further embodiment is a computer having installed thereon the computer program for performing one of the methods described herein.

A further embodiment is an apparatus or a system configured to transfer (e.g., electronically or optically) a Computer program for performing one of the methods described herein to a receiver. The receiver may, for example, comprise a computer, a mobile device, a Memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**REFERENCE SIGNS**

102 input function
104 encoder
106 encoded representation
108 approximator
110 approximated representation
112 decoder
114 output function
202 primary quantity
204 secondary quantity
206 multi-branch transformer
208 main branch
210 auxiliary branch
212 physics parameters
402 hopper
404 fluidized bed reactor
1700 method
1702 receiving step
1704 field representation generating step
1706 prediction generating step
1708 displaying step

**Claims**

1. A method of real-time simulation of a material flow in an industrial process, comprising:

   receiving input data that characterizes one or more physics parameters of the material flow in the industrial process;
   generating a continuous field representation of the input data;
   generating, using a trained machine-learning model that takes as input the continuous field representation, a prediction of the material flow in the industrial process; and
   displaying a result of the prediction on an electronic display.

2. The method of claim 1, wherein the material flow comprises one or more of:

   a particle flow;
   a fluid flow;
   a coupled particle-fluid flow.

3. The method of claim 1 or 2, wherein the step of displaying a result of the prediction is performed while the simulation is running and/or while the industrial process is running.

4. The method of any one of claims 1 to 3, wherein the step of generating a prediction of the material flow is performed while the simulation is running and/or while the industrial process is running.

5. The method of any one of claims 1 to 4, wherein the continuous field representation is configured to model a Lagrangian discretization of a Discrete Element Method (DEM) routine in a compressed latent space.

6. The method of any one of claims 1 to 4, wherein the machine-learning model comprises a neural operator.

7. The method of claim 6, wherein the neural operator is configured to calculate a numerical Discrete Element Method (DEM) routine.

8. The method of claim 6 or 7, wherein the neural operator is a multi-branch neural operator comprising at least one main branch and at least one auxiliary branch;

   wherein the at least one main branch is configured to model a primary quantity that represents one or more microscopic properties of the material flow and/or the industrial process, preferably as continuous field representation;
   wherein the at least one auxiliary branch is configured to model a secondary quantity that represents one or more macroscopic properties of the material flow and/or the industrial process, preferably as continuous field representation.

9. The method of claim 8, wherein the multi-branch neural operator comprises a plurality of main branches, wherein the corresponding primary quantities influence each other.

10. The method of claim 8 or 9, wherein the multi-branch neural operator comprises a plurality of auxiliary branches, wherein the corresponding secondary quantities are independent.

11. The method of any one of claims 8 to 10, wherein each main branch and auxiliary branch comprises a stack of transformer blocks where weights are not shared between branches.

12. A trained machine-learning model configured for use in the method of any one of claims 1 to 11.

13. A data processing apparatus comprising means for carrying out the method of any one of claims 1 to 11.

14. A computer program comprising instructions which, when the program is executed by a computer, cause the computer to carry out the method of any one of claims 1 to 11.

15. A computer-readable medium comprising instructions which, when executed by a computer, cause the computer to carry out the method of any one of claims 1 to 11.

INPUT FUNCTION — 102

ENCODER
104

ENCODED REPRESENTATION — 106

APPROXIMATOR
108

APPROXIMATED REPRESENTATION — 110

DECODER
112

OUTPUT FUNCTION — 114

**FIG. 1**

PRIMARY     PRIMARY     PRIMARY          SECONDARY  SECONDARY
QUANTITY   QUANTITY   QUANTITY          QUANTITY    QUANTITY

202          202          202                   204          204

MULTI-BRANCH TRANSFORMER 206

PHYSICS
PARAMETERS
212

208 ↔ 208 ↔ 208 → 210 → 210

FIG. 2

**FIG. 3**

(a) Hopper        (b) Fluidized bed

| Parameter | Value |
|---|---|
| Hopper diameter $D_{HO}$ | 0.24 m |
| Hopper height $H_{HO}$ | 0.40 m |
| Hopper outlet diameter $O_{HO}$ | 0.05 m |
| Hopper angle $\alpha_{HO}$ | 0-60° |
| Hopper particle diameter $d$ | 0.004 m |
| FB width $w_{FB}$ | 0.096 m |
| FB height $h_{FB}$ | 0.24 m |
| FB particle diameter $d_{FB}$ | 0.0012 m |

(c) Dimensions of the cases

**FIG. 4**

(a) Mass flow regime

(b) Funnel flow regime

(c) Mass flow regime

(d) Funnel flow regime

**FIG. 5**

(a) Outflow rate      (b) Drainage time [s]      (c) Residual volume [%]

## FIG. 6

(a) Outflow rate      (b) Drainage time      (c) Residual volume

## FIG. 7

(a) Mass flow regime      (b) Funnel flow regime

## FIG. 8

**FIG. 9**

(a) Ground truth DEM simulation

(b) NeuralDEM using microscopic parameter conditioning

(c) NeuralDEM using macroscopic parameter conditioning

**FIG. 10**

(a) Ground truth DEM simulation $t_{ref}$

(b) Ground truth DEM simulation $t_{ref} + 5\,\mathrm{s}$

(c) NeuralDEM prediction $t_{ref} + 5\,\mathrm{s}$

**FIG. 11**

NeuralDEM prediction  Ground truth CFD-DEM simulation

(a) Low inlet velocity

NeuralDEM prediction  Ground truth CFD-DEM simulation

(b) High inlet velocity

**FIG. 12**

(a) Low inlet velocity                    (b) Low inlet velocity

**FIG. 13**

(a) Low inlet velocity                    (b) High inlet velocity

**FIG. 14**

(a)          (b)

**FIG. 15**

(a) Low inlet velocity     (b) Medium inlet velocity     (c) High inlet velocity

**FIG. 16**

1700

RECEIVE INPUT DATA THAT CHARACTERIZES ONE OR MORE PHYSICS PARAMETERS OF THE MATERIAL FLOW IN THE INDUSTRIAL PROCESS 1702

GENERATE A CONTINUOUS FIELD REPRESENTATION OF THE INPUT DATA 1704

GENERATE, USING A TRAINED MACHINE-LEARNING MODEL THAT TAKES AS INPUT THE CONTINUOUS FIELD REPRESENTATION, A PREDICTION OF THE MATERIAL FLOW IN THE INDUSTRIAL PROCESS 1706

DISPLAY A RESULT OF THE PREDICTION ON AN ELECTRONIC DISPLAY 1708

**FIG. 17**

**FIG. 18**

Europäisches
Patentamt

European
Patent Office

Office européen
des brevets

# EUROPEAN SEARCH REPORT

**Application Number**

EP 24 21 2271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 410 730 A (SUZHOU INDUSTRIAL PARK MONAS SCIENCE AND TECH RESEARCH INSTITUTE) 30 July 2024 (2024-07-30) | 1-4, 12-15 | INV. G06F30/25 G06F30/27 |
| Y | * paragraph [0002] - paragraph [0092] * | 5-11 | G06N3/045 |
| Y,D | BENEDIKT ALKIN ET AL: "Universal Physics Transformers: A Framework For Efficiently Scaling Neural Operators", ARXIV.ORG, CORNELL UNIVERSITY LIBRARY, 201 OLIN LIBRARY CORNELL UNIVERSITY ITHACA, NY 14853, 8 October 2024 (2024-10-08), XP091897489, | 5-11 | |
| A | * Abstract; pages 1-2, section 1; pages 4-10, sections 3-5; Figures 1, 3, 6 * | 1-4, 12-15 | |
| A | LE DUY ET AL: "Machine Learning Accelerated Prediction of 3D Granular Flows in Hoppers", 17 September 2024 (2024-09-17), ARTIFICIAL NEURAL NETWORKS AND MACHINE LEARNING - ICANN 2024; [LECTURE NOTES IN COMPUTER SCIENCE; LECT.NOTES COMPUTER], SPRINGER NATURE SWITZERLAND, CHAM, PAGE(S) 325 - 339, XP047709626, ISSN: 0302-9743 ISBN: 978-3-031-72355-1 [retrieved on 2024-09-17] * Abstract; pages 325-327, section 1; pages 328-337; section 3-5; Figures 2, 3, 4, 6 * | 1-15 | |

-/--

| | | | TECHNICAL FIELDS SEARCHED (IPC) |
|---|---|---|---|
| | | | G06F G06N |

The present search report has been drawn up for all claims

| Place of search | Date of completion of the search | Examiner |
|---|---|---|
| Munich | 3 March 2025 | Lindner, Anja |

EPO FORM 1503 03.82 (P04C01)

page 1 of 2

Europäisches Patentamt

European Patent Office

Office européen des brevets

## EUROPEAN SEARCH REPORT

**Application Number**

EP 24 21 2271

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "UPT++: LATENT POINT SET NEURAL OPERATORS FOR MODELING SYSTEM STATE TRANSITIONS", , 27 September 2024 (2024-09-27), XP093255295, Retrieved from the Internet: URL:https://openreview.net/forum?id=qXEmoW11KW * Abstract; pages 1-3, section 1; pages 4-10, sections 3-5; Figures 1, 2 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 3 March 2025 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2271

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| CN 118410730 A | 30-07-2024 | NONE | |

For more details about this annex : see Official Journal of the European Patent Office, No. 12/82

## REFERENCES CITED IN THE DESCRIPTION

**Patent documents cited in the description**

- DE 202024104633 U1

- US 806925

**Non-patent literature cited in the description**

- **CUNDALL, P. A.** ; **STRACK, O.** D. L. A discrete numerical model for granular assemblies. *Geotechnique*, 1979, vol. 29 (1), 47-65
- **ESSER, P.** ; **KULAL, S.** ; **BLATTMANN, A.** ; **ENTEZARI, R.** ; **MÅNULLER, J.** ; **SAINI, H.** ; **LEVI, Y.** ; **LORENZ, D.** ; **SAUER, A.** ; **BOESEL, F.** caling rectified flow transformers for high-resolution image synthesis.. *Forty-first International Conference on Machine Learning, ICML 2024, Vienna, Austria*, 21 July 2024, https://openreview.net/forum?id=FP-nUhsQJ5B

- **ALKIN, B.** ; **FÜRST, A.** ; **SCHMID, S.** ; **GRUBER, L.** ; **HOLZLEITNER, M.** ; **BRANDSTETTER, J.** Universal physics transformers. *arXiv preprint arXiv:2402.12365*, 2024
- **NOROUZI, H. R.** ; **ZARGHAMI, R.** ; **SOTUDEH-GHAREBAGH, R.** ; **MOSTOUFI, N.** Coupled CFD-DEM modeling: formulation, implementation and application to multiphase flows. John Wiley & Sons, 2016